# EUROPEAN PATENT APPLICATION

(11) **EP 4 697 841 A1**
(43) Date of publication of application: **18.02.2026**
(21) Application number: 23933062.4
(22) Date of filing: 14.04.2023
(51) Int. Cl.: H04W 72/512, H04W 72/0453, H04W 72/1268, H04W 72/1273, H04W 84/12

(54) **ACCESS POINT AND WIRELESS TERMINAL DEVICE**

(71) Applicant: NTT, Inc., Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2023/015173
(87) International publication number: WO 2024/214286

(57) **Abstract**

An access point of the embodiment includes a communication circuit and a processor. The communication circuit transmits and receives wireless signals using a plurality of subcarriers. The processor establishes links with a plurality of wireless terminal apparatuses using the communication circuit. The processor groups the plurality of subcarriers to set a plurality of units including a first unit associated with low-latency traffic and a second unit associated with other traffic. When low-latency traffic occurs, the processor checks a communication state of the second unit, when the second unit is transmitting first traffic in a downlink direction, the processor transmits the occurred low-latency traffic to one of the plurality of wireless terminal apparatuses using the first unit in parallel with the transmission of the first traffic, and when the second unit is receiving second traffic in an uplink direction, the processor transmits the occurred low-latency traffic to one of the plurality of wireless terminal apparatuses using the first unit during a waiting period for the transmission of the second traffic or after the reception of the second traffic is completed.

## Description

### [Technical Field]

The embodiment relates to an access point and a wireless terminal apparatus.

### [Background Art]

A wireless LAN (Local Area Network) is known as a communication system that wirelessly connects an access point and a wireless terminal apparatus. A wireless terminal apparatus can access a network via an access point within a communication area using a wireless LAN. In addition, an R-TWT (restricted target wake time) function is known as a method for transmitting and receiving low-latency traffic that requires low latency between an access point and a wireless terminal apparatus. An access point that uses the R-TWT function sets a service period at a period according to the required latency of the low-latency traffic and notifies the wireless terminal apparatus of the set service period using a beacon signal. The access point then prioritizes transmission and reception of low-latency traffic during the periodically set service period. This can reduce the latency and jitter of the low-latency traffic.

### [Citation List]

### [Non Patent Literature]

[NPL 1] IEEE802.11be D3.0, "35.8 Restricted TWT (R-TWT)," p617-p621, January 2023
[NPL 2] IEEE802.11-2020, "17. Orthogonal frequency division multiplexing (OFDM) PHY specification," p2802-p2847, December 2020

### [Summary of Invention]

### [Technical Problem]

However, low-latency traffic may include not only low-latency traffic that occurs periodically, but also low-latency traffic that occurs non-periodically. In a communication system, it is desirable to be able to satisfy the required latency for low-latency traffic that occurs non-periodically.

The present invention has been made in consideration of the above circumstances, and an object thereof is to provide an access point and a terminal capable of satisfying the required latency of low-latency traffic that occurred non-periodically.

### [Solution to Problem]

An access point of the embodiment includes a communication circuit and a processor. The communication circuit transmits and receives wireless signals using a plurality of subcarriers. The processor establishes links with a plurality of wireless terminal apparatuses using the communication circuit. The processor groups the plurality of subcarriers to set a plurality of units including a first unit associated with low-latency traffic and a second unit associated with other traffic. When low-latency traffic occurs, the processor checks a communication state of the second unit. When the second unit is transmitting first traffic in a downlink direction, the processor transmits the occurred low-latency traffic to one of the plurality of wireless terminal apparatuses using the first unit in parallel with the transmission of the first traffic. When the second unit is receiving second traffic in an uplink direction, the processor transmits the occurred low-latency traffic to one of the plurality of wireless terminal apparatuses using the first unit during a waiting period for the transmission of the second traffic or after the reception of the second traffic is completed.

### [Advantageous Effects of Invention]

According to the embodiment, it is possible to provide an access point and a wireless terminal apparatus that can satisfy the required latency of low-latency traffic that occurs non-periodically.

### [Brief Description of Drawings]

[Fig. 1] Fig. 1 is a block diagram showing an example of a configuration of a communication system according to an embodiment.
[Fig. 2] Fig. 2 is a schematic diagram showing an example of a RU allocated to a 20 MHz band.
[Fig. 3] Fig. 3 is a table showing an example of the maximum number of RUs per channel bandwidth when RUs made up of the same number of subchannels are used.
[Fig. 4] Fig. 4 is a schematic diagram showing an example of a format of a wireless frame used in a communication system according to an embodiment.
[Fig. 5] Fig. 5 is a schematic diagram showing an example of a format of a trigger frame used in a communication system according to an embodiment.
[Fig. 6] Fig. 6 is a table showing an example of a UL bandwidth subfield, RU size, and RU index associated with the value of the RU allocation subfield of a trigger frame used in a communication system according to an embodiment.
[Fig. 7] Fig. 7 is a block diagram showing an example of a hardware configuration of an access point according to an embodiment.
[Fig. 8] Fig. 8 is a block diagram showing an example of a hardware configuration of a wireless terminal apparatus according to an embodiment.
[Fig. 9] Fig. 9 is a block diagram showing an example of a functional configuration of an access point according to an embodiment.
[Fig. 10] Fig. 10 is a block diagram showing an example of a configuration of a channel access function of an access point according to an embodiment.
[Fig. 11] Fig. 11 is a block diagram showing an example of a functional configuration of a wireless terminal apparatus according to an embodiment.
[Fig. 12] Fig. 12 is a block diagram showing an example of a configuration of a channel access function of a wireless terminal apparatus according to an embodiment.
[Fig. 13] Fig. 13 is a time chart showing an example of a downlink data transfer method using OFDMA in a communication system according to an embodiment.
[Fig. 14] Fig. 14 is a time chart showing an example of an uplink data transfer method using OFDMA in a communication system according to an embodiment.
[Fig. 15] Fig. 15 is a schematic diagram showing an example of a configuration of an OFDMA frame transfer period in a communication system according to an embodiment.
[Fig. 16] Fig. 16 is a flowchart showing an example of a dedicated RU allocation negotiation method by a quality management unit of an access point according to an embodiment.
[Fig. 17] Fig. 17 is a flowchart showing an example of a communication quality management method of a quality management unit of an access point according to an embodiment.
[Fig. 18] Fig. 18 is a flowchart showing an example of a RU allocation method by a resource control unit of an access point according to an embodiment.
[Fig. 19] Fig. 19 is a flowchart showing an example of a trigger frame generation method by a frame processing unit of an access point according to an embodiment.
[Fig. 20] Fig. 20 is a flowchart showing an example of an OFDMA frame generation method by a frame processing unit of an access point according to an embodiment.
[Fig. 21] Fig. 21 is a flowchart showing an example of a downlink OFDMA frame transmission method by a transmitter/receiver unit of an access point according to an embodiment.
[Fig. 22] Fig. 22 is a flowchart showing an example of a downlink non-periodic low-latency traffic transmission method by a transmitter/receiver unit of an access point according to an embodiment.
[Fig. 23] Fig. 23 is a flowchart showing an example of a dedicated RU allocation negotiation method by a quality management unit of a wireless terminal apparatus according to an embodiment.
[Fig. 24] Fig. 24 is a flowchart showing an example of a communication quality management method by a quality management unit of a wireless terminal apparatus according to an embodiment.
[Fig. 25] Fig. 25 is a flowchart showing an example of an RU allocation information acquisition and updating method by a resource control unit of a wireless terminal apparatus according to an embodiment.
[Fig. 26] Fig. 26 is a flowchart showing an example of a downlink frame processing method by a frame processing unit of a wireless terminal apparatus according to an embodiment.
[Fig. 27] Fig. 27 is a flowchart showing an example of an uplink frame processing method by a frame processing unit of a wireless terminal apparatus according to an embodiment.
[Fig. 28] Fig. 28 is a flowchart showing an example of a downlink frame reception method by a transmitter/receiver unit of a wireless terminal apparatus according to an embodiment.
[Fig. 29] Fig. 29 is a flowchart showing an example of an uplink OFDMA frame transmission method by a transmitter/receiver unit of a wireless terminal apparatus according to an embodiment.
[Fig. 30] Fig. 30 is a flowchart showing an example of an uplink non-periodic low-latency traffic transmission method by a transmitter/receiver unit of a wireless terminal apparatus according to an embodiment.

### [Description of Embodiments]

Embodiments are described below with reference to the drawings. In the embodiment, a device or a method for embodying the technical idea of the invention will be exemplified. The drawings are schematic or conceptual. In the following description, components having the same function and configuration are assigned a common reference symbol. In addition, when a plurality of components having the same function and configuration are to be distinguished from each other, a hyphen and a number are added to the end of the reference symbol.

### <1> Configuration

First, the configuration of a communication system 1 according to the embodiment will be described.

### <1-1> Configuration of communication system 1

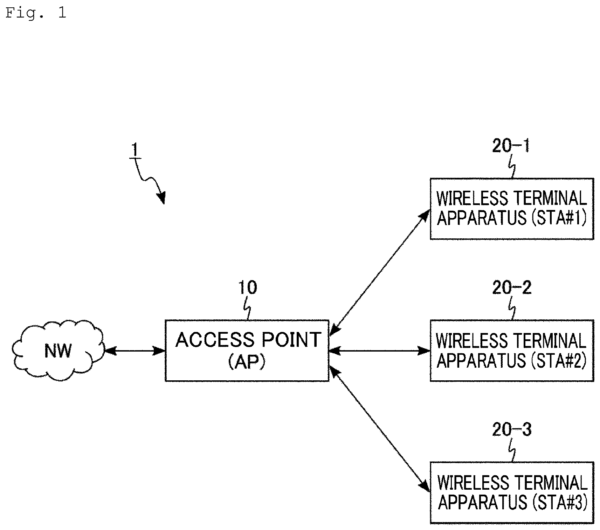

Fig. 1 is a block diagram showing an example of the configuration of the communication system 1 according to the embodiment. As shown in Fig. 1, the communication system 1 includes an access point (hereinafter also referred to as "AP") 10 and at least one wireless terminal apparatus 20. In the example shown in Fig. 1, three wireless terminal apparatuses 20-1, 20-2, and 20-3 are wirelessly connected to the access point 10.

The access point 10 is a base station of a wireless LAN. The access point 10 is configured to establish links with a plurality of wireless terminal apparatuses 20 and be able to wirelessly communicate with each of the wireless terminal apparatuses 20 with which the link has been established. The access point 10 is also connected to a network NW and is configured to be able to communicate with a server (not shown) on the network NW. The access point 10 and the network NW may be connected wirelessly or by wire.

The wireless terminal apparatus 20 is a wireless terminal such as a smartphone or a personal computer (PC). The wireless terminal apparatus 20 is configured to be able to communicate with a server on the network NW via the wirelessly connected access point 10. In the following, the wireless terminal apparatuses 20-1, 20-2, and 20-3 that have established a link with the access point 10 are also referred to as "STA#1," "STA#2," and "STA#3," respectively.

Communication between the access point 10 and the wireless terminal apparatus 20 is based on, for example, the IEEE802.11 standard. The IEEE802.11 standard has a wireless communication function based on the open systems interconnection (OSI) reference model. In the OSI reference model, communication functions are divided into seven layers (Layer 1: physical layer, Layer 2: data link layer, Layer 3: network layer, Layer 4: transport layer, Layer 5: session layer, Layer 6: presentation layer, and Layer 7: application layer). The data link layer includes a logical link control (LLC) sublayer and a media access control (MAC) sublayer. The LLC sublayer forms an LLC packet by adding a destination service access point (DSAP) header and a source service access point (SSAP) header to data input from an upper application. The MAC layer adds an MAC header to an LLC packet, for example, to form an MAC frame. This specification mainly describes the processing of the MAC sublayers of the first and second layers, and omits the processing of other layers.

Each of the access point 10 and the wireless terminal apparatus 20 supports Orthogonal Frequency Division Multiple Access (OFDMA) as a wireless communication method. OFDMA is a method that combines Orthogonal Frequency Division Multiplexing (OFDM) and Time Division Multiple Access (TDMA). OFDM is a method that divides a channel bandwidth allocated to wireless communication into a plurality of subcarriers (tones). OFDM achieves narrowband subcarriers by ensuring that the phases of subcarriers assigned to adjacent frequencies are orthogonal to each other and allowing parts of the frequency band to overlap. TDMA is a multiplexing method that divides the carrier used for communication into fixed periods and allocates STAs to each period. OFDMA, which is a combination of OFDM and TDMA, divides the right to use each subcarrier into time periods and allocates it to different STAs. OFDMA can finely change the allocation of subcarriers according to the radio wave conditions of each STA, improving the efficiency of radio wave usage. In OFDMA, subcarriers are allocated to a plurality of STAs in units of RUs (resource units).

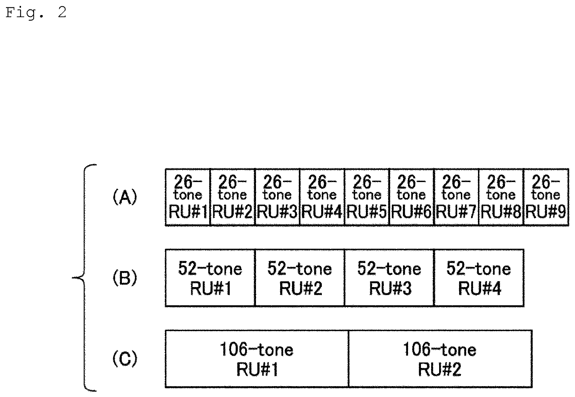

Fig. 2 is a schematic diagram showing an example of RUs allocated to a 20 MHz band. (A) in Fig. 2 illustrates an example in which nine 26-tone RUs #1 to #9, each made up of 26 subcarriers, are allocated to the 20 MHz band. In this case, one of the nine 26-tone RUs #1 to #9 is allocated to each STA. (B) in Fig. 2 illustrates an example in which four 52-tone RUs #1 to #4, each made up of 52 subcarriers, are allocated to a 20 MHz band. In this case, one of the four 52-tone RUs #1 to #4 is allocated to each STA. (C) in Fig. 2 illustrates an example in which two 106-tone RUs #1 and #2, each made up of 106 subcarriers, are allocated to a 20 MHz band. In this case, one of the two 52-tone RUs #1 and #2 is allocated to each STA. Note that an RU may be made up of other numbers of subcarriers. For example, an RU may be made up of more than 106 subcarriers. In addition, a plurality of types of RUs, each made up of a different number of subcarriers, may be allocated to a channel band allocated to wireless communication. The maximum number of RUs varies depending on the channel bandwidth allocated to wireless communication.

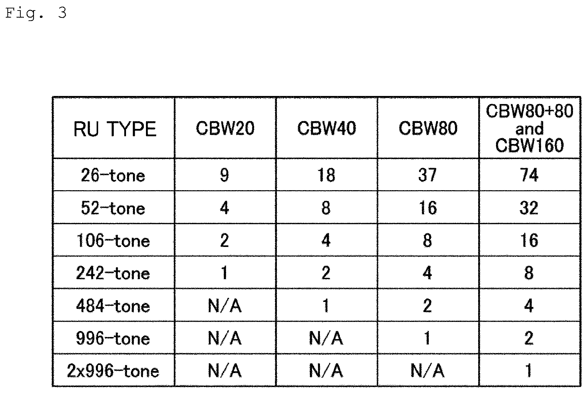

Fig. 3 is a table showing an example of the maximum number of RUs for each channel bandwidth when RUs having the same number of subchannels are used. The RU type corresponds to the number of subchannels allocated to the RU. CBW20, CBW40, CBW80, and CBW160 correspond to channel bandwidths of 20 MHz, 40 MHz, 80 MHz, and 160 MHz, respectively. CBW80+80 corresponds to the case where two 80 MHz channels are used. In other words, the total channel bandwidth allocated to CBW80+80 is the same as CBW160. "N/A" indicates that the item is not applicable. As shown in Fig. 3, when RUs with the same number of subchannels are used, the wider the channel bandwidth, the greater the number of RUs.

Specifically, when 26-tone RUs are used, 9, 18, 37, and 74 26-tone RUs can be allocated to CBW20, CBW40, CBW80, (CBW80+80, and CBW160), respectively. When 52-tone RUs are used, 4, 8, 16, and 32 52-tone RUs can be allocated to CBW20, CBW40, CBW80, (CBW80+80, and CBW160), respectively. When 106-tone RUs are used, 2, 4, 8, and 16 106-tone RUs can be allocated to CBW20, CBW40, CBW80, (CBW80+80, and CBW160), respectively. When 242-tone RUs are used, 1, 2, 4, and 8 242-tone RUs can be allocated to CBW20, CBW40, CBW80, (CBW80+80, and CBW160), respectively. When 484-tone RUs are used, 1, 2, and 4 484-tone RUs can be allocated to CBW40, CBW80, (CBW80+80, and CBW160), respectively. When 996-tone RUs are used, 1 and 2 996-tone RUs can be allocated to CBW80, (CBW80+80, and CBW160), respectively. When 2x996-tone RUs are used, 1 2x996-tone RU can be allocated to (CBW80+80, and CBW160).

### (Wireless frame format)

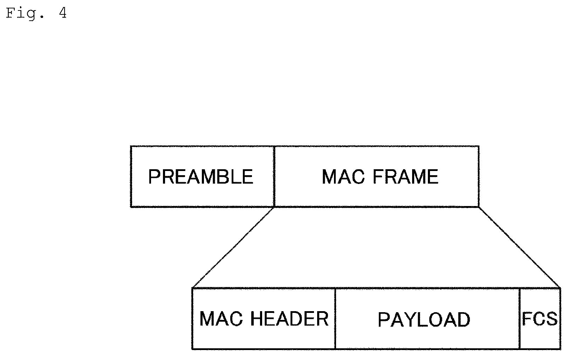

Fig. 4 is a schematic diagram showing an example of a format of a wireless frame used in the communication system 1 according to the embodiment. As shown in Fig. 4, the wireless frame includes a preamble and a MAC frame. The preamble is placed at the beginning of the wireless frame and includes a bit string indicating the start position of the wireless frame. The MAC frame includes, for example, a MAC header, a payload, and an FCS (Frame Check Sequence) field. The MAC header stores information such as a frame type and a data length. The payload stores information according to the frame type, and includes an LLC packet when data (traffic) is transmitted. The FCS field stores an error detection code used to detect errors in the MAC header and the payload. In the communication system 1, the access point 10 can control the transmission of uplink data (traffic) by the STA using the trigger frame. The format of the trigger frame will be described below.

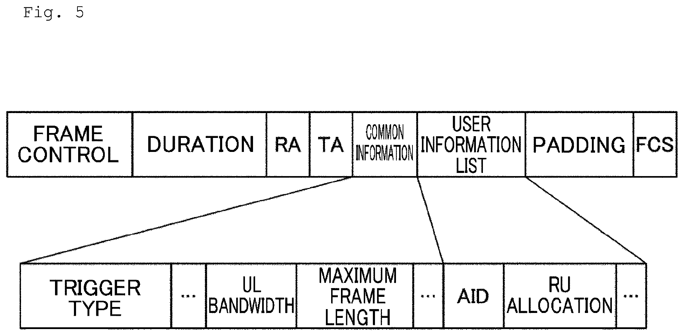

Fig. 5 is a schematic diagram showing an example of a format of a trigger frame used in the communication system 1 according to the embodiment. As shown in Fig. 5, the plurality of fields included in the trigger frame include, for example, a frame control field, a duration field, a first address field (RA: Receiver Address), a second address field (TA: Transmitter Address), a common information field, a user information list field, a padding field, and a frame check sequence (FCS) field. In this example, the set of the frame control field, the duration field, and the address field corresponds to the MAC header, and the set of the common information field, the user information list field, and the padding field corresponds to the payload.

The frame control field stores various control information. For example, the frame control field includes information indicating the frame type of the wireless frame. The duration field indicates the scheduled period of time during which the wireless line will be used. The first address field and the second address field indicate the BSSID (Basic Service Set Identifier), the source address, the destination address, the address of the transmitter terminal, the address of the receiver terminal, and the like. The common information field indicates information shared among a plurality of STAs. The user information list field indicates information allocated to each STA. The padding is an area for adjusting a data length of a wireless frame.

The common information field includes, for example, a trigger type subfield, a UL (Uplink) bandwidth subfield, and a maximum frame length subfield. The trigger type subfield indicates the type of trigger frame. The UL bandwidth subfield indicates the transmission bandwidth. The maximum frame length subfield indicates the maximum length of a frame that can satisfy the required latency of non-periodic low-latency traffic, which will be described later.

The user information list field includes, for example, an AID (terminal identifier) subfield and an RU allocation subfield. The allocation of an RU can be specified by the STA specified by the AID subfield and the location of the RU indicated by the RU allocation subfield. In other words, the STA can recognize that an RU for the subject station is allocated by the AID subfield. The STA can recognize the setting of the RU allocated to the subject station by the RU allocation subfield.

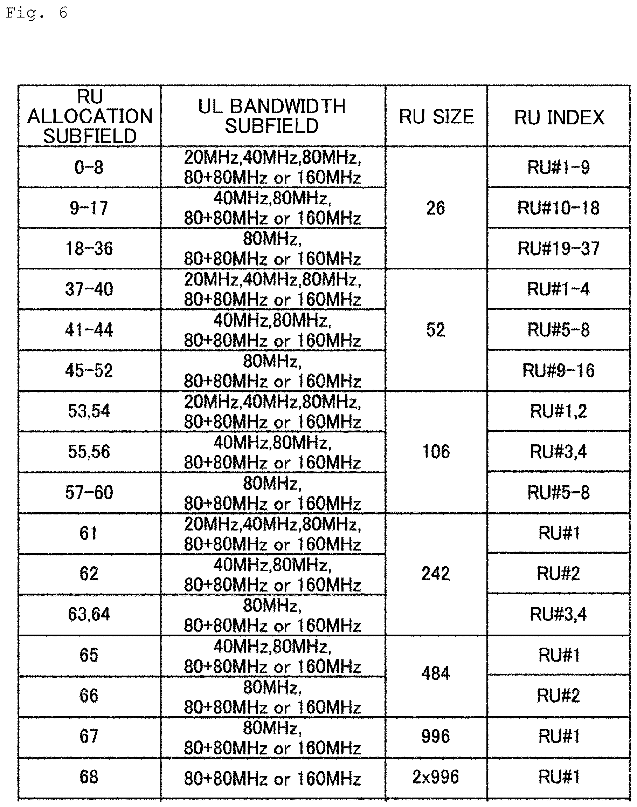

Fig. 6 is a table showing an example of the contents of the UL bandwidth subfield, RU size, and RU index associated with the value of the RU allocation subfield of the trigger frame used in the communication system 1 according to the embodiment. At least one channel bandwidth described in the UL bandwidth subfield indicates the channel bandwidth available for the associated RU allocation subfield. The RU size indicates the number of subchannels (number of tones). The RU index indicates index information used to distinguish between RUs. As shown in Fig. 6, in the communication system 1, the channel bandwidth, RU size, and RU index can be specified based on the value stored in the RU allocation subfield.

Specifically, 26-tone RUs #1 to #37 are associated with the RU allocation subfields "0" to "36," respectively. 52-tone RUs #1 to #16 are associated with the RU allocation subfields "37" to "52," respectively. 106-tone RUs #1 to #8 are associated with RU allocation subfields "53" to "60," respectively. 242-tone RUs #1 to #4 are associated with RU allocation subfields "61" to "64," respectively. 484-tone RUs #1 and #2 are associated with RU allocation subfields "65" and "66," respectively. 996-tone RU#1 is associated with RU allocation subfield "67." 2x996-tone RU#1 is associated with RU allocation subfield "68."

### <1-2> Hardware configuration of communication system 1

The following describes the hardware configuration of the communication system 1 according to the embodiment.

### <1-2-1> Hardware configuration of access point 10

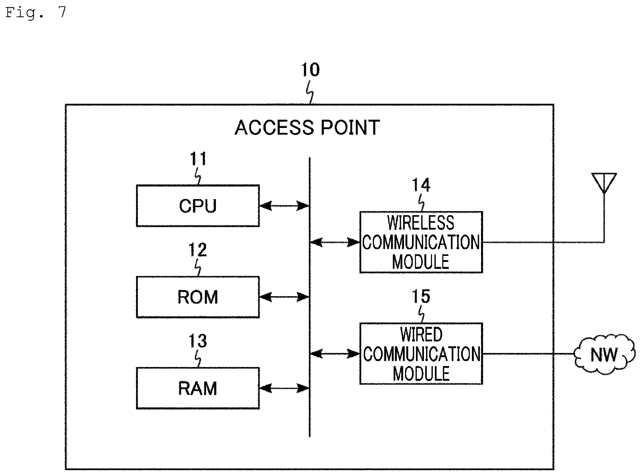

Fig. 7 is a block diagram showing an example of the hardware configuration of the access point 10 according to the embodiment. As shown in Fig. 7, the access point 10 includes, for example, a central processing unit (CPU) 11, a read only memory (ROM) 12, a random access memory (RAM) 13, a wireless communication module 14, and a wired communication module 15.

The CPU 11 is an integrated circuit capable of executing various programs, and controls the overall operation of the access point 10. The ROM 12 is, for example, a non-volatile semiconductor memory, and stores programs and control data for controlling the access point 10. The RAM 13 is, for example, a volatile semiconductor memory, and is used as a working area for the CPU 11. The wireless communication module 14 is configured to be able to transmit and receive wireless signals via an antenna, and is a circuit used for transmitting and receiving data and the like between the wireless terminal apparatus 20. The wired communication module 15 is a circuit used for transmitting and receiving data and the like by wired signals, and is configured to be connectable to the network NW.

Note that the access point 10 may have other hardware configurations. For example, the access point 10 may be wirelessly connected to the network NW. In this case, the wired communication module 15 may be omitted from the access point 10. The antenna may be built into the access point 10, or may be connected externally. The CPU 11 may be called a "processor." The wireless communication module 14 may be called a "communication circuit."

### <1-2-2> Hardware configuration of wireless terminal apparatus 20

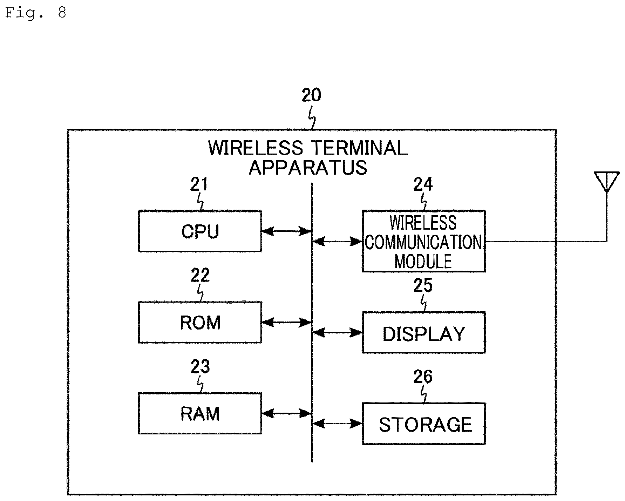

Fig. 8 is a block diagram showing an example of the hardware configuration of the wireless terminal apparatus 20 according to the embodiment. As shown in Fig. 8, the wireless terminal apparatus 20 includes, for example, a CPU 21, a ROM 22, a RAM 23, a wireless communication module 24, a display 25, and a storage 26.

The CPU 21 is an integrated circuit capable of executing various programs, and controls the overall operation of the wireless terminal apparatus 20. The ROM 22 is, for example, a non-volatile semiconductor memory, and stores programs and control data for controlling the wireless terminal apparatus 20. The RAM 23 is, for example, a volatile semiconductor memory, and is used as a working area for the CPU 21. The wireless communication module 24 is configured to be able to transmit and receive wireless signals via an antenna, and is a circuit used for transmitting and receiving data to and from the access point 10. The display 25 displays, for example, a GUI (Graphical User Interface) and the like corresponding to application software. The storage 26 is a non-volatile storage device, and stores, for example, system software of the wireless terminal apparatus 20.

Note that the wireless terminal apparatus 20 may have other hardware configurations. For example, when the wireless terminal apparatus 20 is an IoT (Internet of Things) terminal or the like, the display 25 may be omitted from the wireless terminal apparatus 20. The display 25 may have a function as an input interface for the wireless terminal apparatus 20. The antenna may be built into the wireless terminal apparatus 20 or may be externally connected. The CPU 21 may be called a "processor." The wireless communication module 24 may be called a "communication circuit."

### <1-3> Functional configuration of communication system 1

The following describes the functional configuration of the communication system 1 according to the embodiment.

### <1-3-1> Functional configuration of access point 10

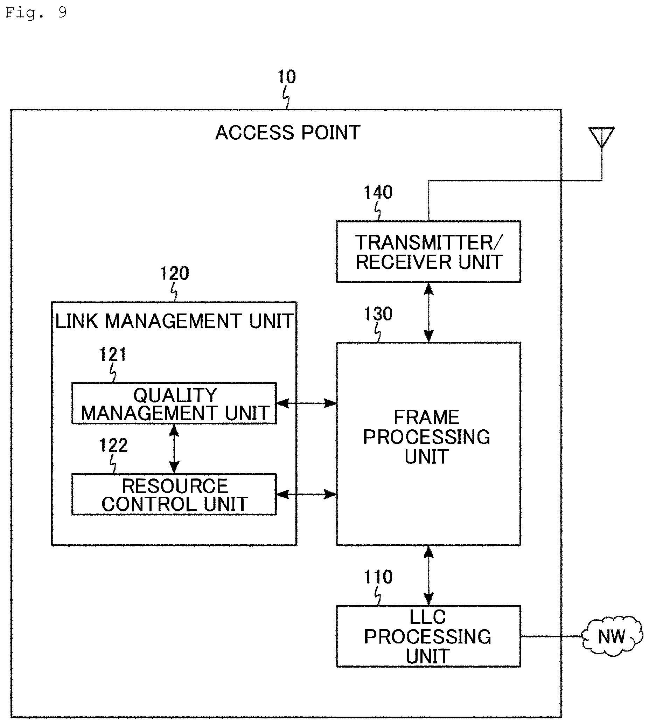

Fig. 9 is a block diagram showing an example of the functional configuration of the access point 10 according to the embodiment. As shown in Fig. 9, the access point 10 functions as a computer including, for example, an LLC processing unit 110, a link management unit 120, a frame processing unit 130, and a transmitter/receiver unit 140. The LLC processing unit 110 executes the processing of the LLC sublayer of the second layer and the third to seventh layers. The link management unit 120, the frame processing unit 130, and transmitter/receiver unit 140 execute the processing of the MAC sublayer of the second layer. The transmitter/receiver unit 140 also executes the processing of the first layer.

The LLC processing unit 110 generates an LLC packet by adding a DSAP header, an SSAP header, and the like to the data received from the network NW. The LLC processing unit 110 then inputs the generated LLC packet to the frame processing unit 130. The LLC processing unit 110 also extracts data from the LLC packet input from the frame processing unit 130. The LLC processing unit 110 then transmits the extracted data to the network NW.

The link management unit 120 manages the state of the link between the access point 10 and the wireless terminal apparatus 20, for example. The link management unit 120 can execute association processing and authentication processing in response to a connection request from the wireless terminal apparatus 20. MAC frames including information about the link, OFDMA, and the like are input and output between the link management unit 120 and the frame processing unit 130. The link management unit 120 includes a quality management unit 121 and a resource control unit 122.

The quality management unit 121 exchanges the required latency of low-latency traffic that occurs non-periodically (hereinafter referred to as "non-periodic low-latency traffic") with the wireless terminal apparatus 20. The quality management unit 121 then requests the resource control unit 122 to provide the necessary dedicated RUs according to the required latency received from the wireless terminal apparatus 20. The dedicated RUs are RUs that are allocated for non-periodic low-latency traffic regardless of the presence or absence of traffic.

The resource control unit 122 determines the allocation of RUs for MAC frames that are the target of transmission using OFDMA. The resource control unit 122 then notifies the frame processing unit 130 of the determined allocation of RUs. In the following, information on RU allocation is also called "RU allocation information." The RU allocation information may include information on the allocation of dedicated RUs when a dedicated RU is requested by the quality management unit 121.

The frame processing unit 130 generates a MAC frame by adding a MAC header to the LLC packet input from the LLC processing unit 110 based on the RU allocation notified by the resource control unit 122. The frame processing unit 130 then outputs the generated MAC frame to the transmitter/receiver unit 140. The frame processing unit 130 can also output a trigger frame generation instruction to the transmitter/receiver unit 140 based on information received from the link management unit 120. The frame processing unit 130 also outputs the MAC frame input from the transmitter/receiver unit 140 to the LLC processing unit 110, the quality management unit 121, the resource control unit 122, and the like depending on the type of MAC frame. The frame processing unit 130 may extract an LLC packet from the MAC frame and output the extracted LLC packet to the LLC processing unit 110 and the like.

The transmitter/receiver unit 140 performs carrier sense based on CSMA/CA for each link and transmits the MAC frame using the link that has acquired a transmittion right. When transmitting a MAC frame, the transmitter/receiver unit 140 generates a wireless frame by adding a preamble and the like to the MAC frame input from the frame processing unit 130. The transmitter/receiver unit 140 then converts the generated wireless frame into a wireless signal (wireless medium) and radiates (transmits) it via an antenna. The transmitter/receiver unit 140 can allocate the MAC frame, which is the target of transmission using OFDMA, to a subcarrier based on RU allocation and transmit the frame. In the following, the MAC frame allocated to the subcarrier based on RU allocation is also called an "OFDMA frame." The transmitter/receiver unit 140 also converts the wireless signal received via the antenna into a wireless frame. The transmitter/receiver unit 140 then extracts the MAC frame from the converted wireless frame and outputs the frame to the frame processing unit 130.

Note that the transmitter/receiver unit 140 may be called an "STA function." The conversion process from the wireless frame to the wireless signal by the transmitter/receiver unit 140 includes, for example, any of convolutional coding, interleaving, subcarrier modulation, inverse fast Fourier transform, OFDM (Orthogonal Frequency Division Multiplexing) modulation, and frequency conversion. The conversion process from the wireless signal to the wireless frame by the transmitter/receiver unit 140 includes, for example, any of frequency conversion, OFDM demodulation, fast Fourier transform, subcarrier demodulation, deinterleaving, and Viterbi decoding. The access point 10 may include a plurality of transmitter/receiver units 140 that handle different channels.

### (Channel access function of access point 10)

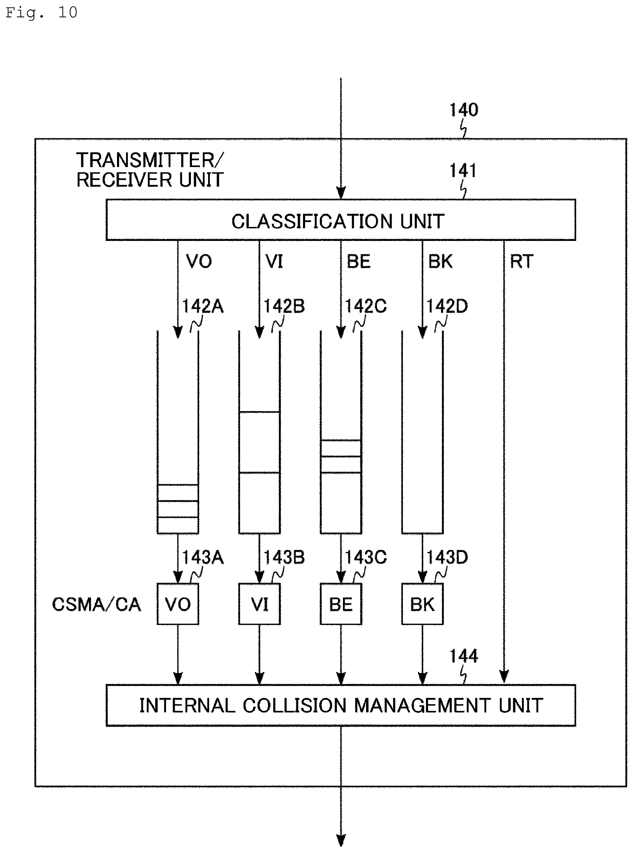

Fig. 10 is a block diagram showing an example of the configuration of the channel access function of the access point 10 according to the embodiment. As shown in Fig. 10, the transmitter/receiver unit 140 includes, for example, a classification unit 141, queues 142A, 142B, 142C, and 142D, carrier sense execution units 143A, 143B, 143C, and 143D, and an internal collision management unit 144.

The classification unit 141 classifies the MAC frames input from the frame processing unit 130 into a plurality of access categories VO (Voice), VI (Video), BE (Best Effort), BK (Background), and RT (Real-time) based on the traffic type (TID: Traffic Identifier) included in the MAC header. The classification unit 141 then inputs the MAC frames corresponding to the access categories VO, VI, BE, and BK into queues 142A, 142B, 142C, and 142D, respectively. The queues 142A, 142B, 142C, and 142D buffer MAC frames corresponding to access categories VO, VI, BE, and BK, respectively. The queues 142A, 142B, 142C, and 142D are associated with the carrier sense execution units 143A, 143B, 143C, and 143D, respectively.

Each of the carrier sense execution units 143A, 143B, 143C, and 143D executes carrier sense based on CSMA/CA (Carrier Sense Multiple Access with Collision Avoidance) according to preset access parameters. The access parameters are set for each access category. For example, the access parameters are set so that the transmission of wireless signals is prioritized in the order of "VO," "VI," "BE," and "BK." Each of the carrier sense execution units 143A, 143B, 143C, and 143D stops acquiring a transmittion right if the channel state during carrier sense is busy, and acquires the transmittion right of a MAC frame if the channel state is idle for a predetermined time. The carrier sense execution unit 143 that has acquired the transmittion right extracts a MAC frame from the associated queue 142 and outputs the extracted MAC frame to the internal collision management unit 144.

The internal collision management unit 144 prevents transmission collisions when a plurality of carrier sense execution units 143 simultaneously acquire the transmittion right. Specifically, when a plurality of MAC frames are input simultaneously, the internal collision management unit 144 preferentially outputs a MAC frame of a high-priority access category. The MAC frame output from the internal collision management unit 144 is converted into a wireless frame after a preamble is added, and transmitted via an antenna.

When the MAC frame input from the frame processing unit 130 is classified as the access category RT, the classification unit 141 performs carrier sense and inputs the MAC frame to the internal collision management unit 144 without passing through each queue 142. The MAC frame classified as the access category RT is, for example, a high-priority frame such as a trigger frame or non-periodic low-latency traffic. The high-priority frame is subjected to carrier sense without passing through each queue 142 and is prioritized over other traffic types, so that it is processed with less latency than other traffic. When transmitting a high-priority frame, the transmitter/receiver unit 140 may temporarily stop the carrier sense of each carrier sense execution unit 143. When a dedicated RU is allocated, the transmitter/receiver unit 140 may transmit the traffic of the access category RT without performing carrier sense using the dedicated RU. The transmitter/receiver unit 140 may generate a trigger frame based on information notified from the frame processing unit 130.

The access parameters used in carrier sense in the transmitter/receiver unit 140 of the access point 10 include, for example, CW (contention window) min, CWmax, AIFS (arbitration inter frame space), and TXOP (transmission opportunity) limit. The contention window is a parameter used to determine the transmission waiting time for collision avoidance. CWmin and CWmax indicate a minimum value and a maximum value of the contention window respectively. AIFS (arbitration inter frame space) indicates a fixed transmission waiting time set for each access category for collision avoidance control with a priority control function. The TXOP corresponds to the occupancy time of the channel. TXOPLimit indicates the upper limit value of TXOP. The shorter the CWmin and the CWmax, the easier it is for the queue 142 to obtain the transmittion right. The priority of the queue 142 becomes higher as the AIFS becomes smaller. The amount of data transmitted with one transmittion right increases as the value of TXOPLimit increases. The access parameters may be called enhanced distributed channel access (EDCA) parameters.

The access point 10 may have other functional configurations as long as it is capable of executing the operations described below. For example, the channel access function of the access point 10 may be implemented in the frame processing unit 130, not in the transmitter/receiver unit 140. The transmission priority may be determined based on the required latency of the non-periodic low-latency traffic, the priority of the traffic (SCS: stream classification service), and the traffic type. The access point 10 may acquire the transmittion right to transfer both the uplink traffic and the downlink traffic. In this case, the access point 10 uses an OFDMA frame to transmit the downlink traffic and a trigger frame to transmit the uplink traffic. The access point 10 may acquire the transmittion right using a common access parameter for the uplink and downlink traffic, and transmit the OFDMA frame and the trigger frame alternately.

### <1-3-2> Functional configuration of wireless terminal apparatus 20

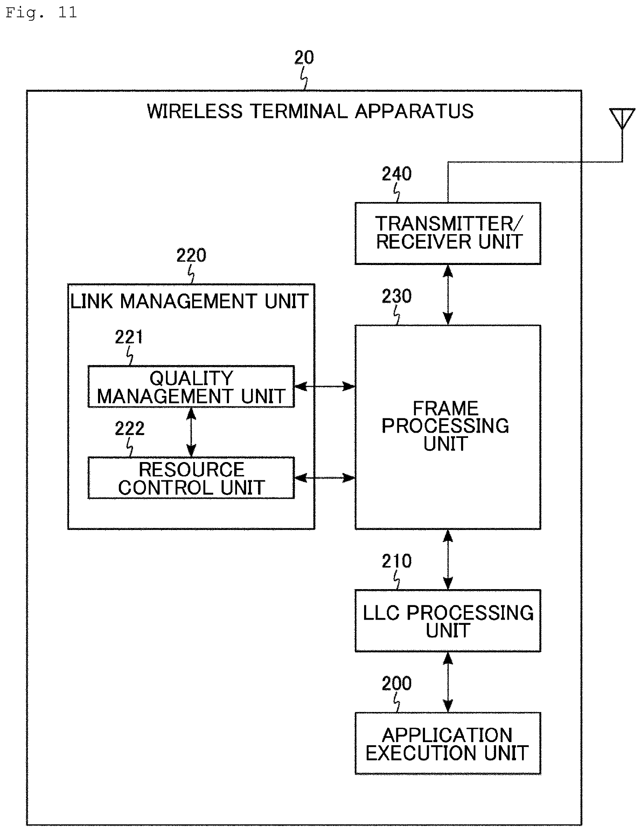

Fig. 11 is a block diagram showing an example of the functional configuration of the wireless terminal apparatus 20 according to the embodiment. As shown in Fig. 11, the wireless terminal apparatus 20 functions as a computer including, for example, an application execution unit 200, an LLC processing unit 210, a link management unit 220, a frame processing unit 230, and a transmitter/receiver unit 240. The application execution unit 200 executes processing corresponding to the seventh layer. The LLC processing unit 210 executes the processing of the LLC sublayer of the second layer and the third to seventh layers. The link management unit 220, the frame processing unit 230, and the transmitter/receiver unit 240 execute the processing of the MAC sublayer of the second layer. The transmitter/receiver unit 240 further executes the processing of the first layer.

The application execution unit 200 executes an application based on data input from the LLC processing unit 210. In addition, the application execution unit 200 inputs data to the LLC processing unit 210. For example, the application execution unit 200 can display information regarding the application on the display 25. In addition, the application execution unit 200 can work based on an operation of the input interface.

The LLC processing unit 210 generates an LLC packet by adding a DSAP header, an SSAP header, and the like to the data received from the network NW. The LLC processing unit 210 then inputs the generated LLC packet to the frame processing unit 230. The LLC processing unit 210 also extracts data from the LLC packet input from the frame processing unit 230. The LLC processing unit 210 then transmits the extracted data to the application execution unit 200.

The link management unit 220 manages the state of the link between the access point 10 and the wireless terminal apparatus 20, for example. The link management unit 220 can transmit a connection request to the access point 10 and perform association processing and authentication processing. Between the link management unit 220 and the frame processing unit 230, a MAC frame including information on the link, OFDMA, and the like is input and output. The link management unit 220 includes a quality management unit 221 and a resource control unit 222.

The quality management unit 221 exchanges the required latency of the non-periodic low-latency traffic with the access point 10. The quality management unit 221 can measure the actual latency value of the non-periodic low-latency traffic and notify the access point 10. The resource control unit 222 acquires RU allocation information notified from the access point 10. Then, based on the acquired RU allocation information, the resource control unit 222 notifies the frame processing unit 230 of the RU allocation.

The frame processing unit 230 generates a MAC frame by adding a MAC header to the LLC packet input from the LLC processing unit 210 based on the RU allocation notified by the resource control unit 222. Then, the frame processing unit 230 outputs the generated MAC frame to the transmitter/receiver unit 240. The frame processing unit 230 outputs the MAC frame input from the transmitter/receiver unit 240 to the LLC processing unit 210, the quality management unit 221, the resource control unit 222, and the like according to the type of MAC frame. The frame processing unit 230 may extract an LLC packet from the MAC frame and output the extracted LLC packet to the LLC processing unit 210 and the like.

The transmitter/receiver unit 240 performs carrier sense based on CSMA/CA for each link and transmits the MAC frame using the link that has acquired a transmittion right. When transmitting a MAC frame, the transmitter/receiver unit 240 generates a wireless frame by adding a preamble and the like to the MAC frame input from the frame processing unit 230. The transmitter/receiver unit 240 then converts the generated wireless frame into a wireless signal (wireless medium) and radiates (transmits) it via an antenna. The transmitter/receiver unit 240 can allocate the OFDMA frame to a subcarrier based on the RU allocation and transmit the frame. The transmitter/receiver unit 240 also converts the wireless signal received via the antenna into a wireless frame. The transmitter/receiver unit 240 then extracts a MAC frame from the converted wireless frame and outputs the frame to the frame processing unit 230.

Note that the transmitter/receiver unit 240 may also be called an "STA function." One link is formed by a pair of the STA function of the access point 10 and the STA function of the wireless terminal apparatus 20. The conversion process from the wireless frame to the wireless signal by the transmitter/receiver unit 240 includes, for example, any of convolutional coding, interleaving, subcarrier modulation, inverse fast Fourier transform, OFDM modulation, and frequency conversion. The conversion process from the wireless signal to the wireless frame by the transmitter/receiver unit 240 includes, for example, any of frequency conversion, OFDM demodulation, fast Fourier transform, subcarrier demodulation, deinterleaving, and Viterbi decoding. The wireless terminal apparatus 20 may include a plurality of transmitter/receiver units 240 that handle different channels.

### (Channel access function of wireless terminal apparatus 20)

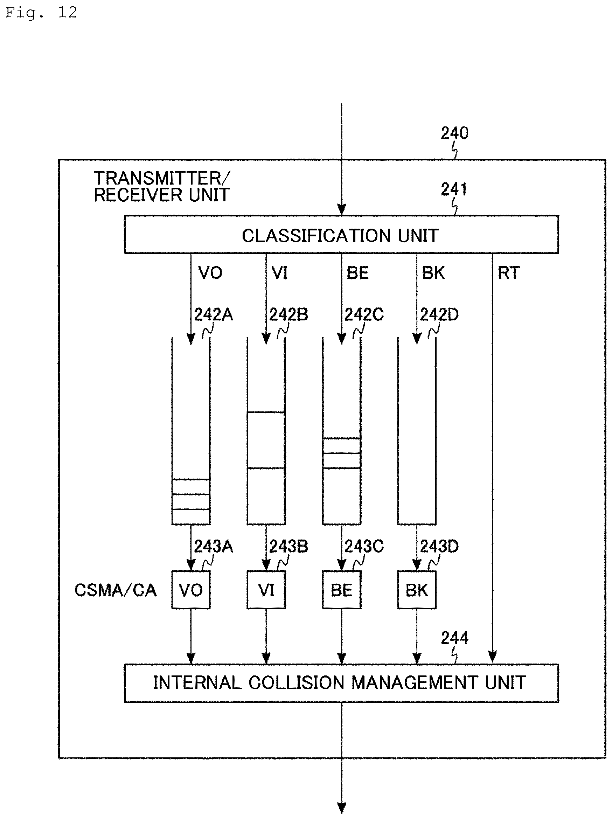

Fig. 12 is a block diagram showing an example of the configuration of the channel access function of the wireless terminal apparatus 20 according to the embodiment. As shown in Fig. 12, the transmitter/receiver unit 240 includes, for example, a classification unit 241, queues 242A, 242B, 242C, and 242D, carrier sense execution units 243A, 243B, 243C, and 243D, and an internal collision management unit 244.

The classification unit 241 classifies the MAC frames input from the frame processing unit 230 into a plurality of access categories VO, VI, BE, BK, and RT based on the traffic type included in the MAC header. The classification unit 241 then inputs the MAC frames corresponding to the access categories VO, VI, BE, and BK into queues 242A, 242B, 242C, and 242D, respectively. The queues 242A, 242B, 242C, and 242D buffer the MAC frames corresponding to the access categories VO, VI, BE, and BK, respectively. The queues 242A, 242B, 242C, and 242D are associated with the carrier sense execution units 243A, 243B, 243C, and 243D, respectively.

Each of the carrier sense execution units 243A, 243B, 243C, and 243D executes carrier sense based on CSMA/CA according to preset access parameters, similar to the transmitter/receiver unit 140 of the access point 10. Each of the carrier sense execution units 243A, 243B, 243C, and 243D stops acquiring a transmittion right if the channel state during carrier sense is busy, and acquires the transmittion right of the MAC frame if the state is idle for a predetermined time. The carrier sense execution unit 243 that has acquired the transmittion right extracts a MAC frame from the associated queue 242 and outputs the extracted MAC frame to the internal collision management unit 244.

The internal collision management unit 244 prevents transmission collisions when a plurality of carrier sense execution units 243 simultaneously acquire the transmittion right. Specifically, when a plurality of MAC frames are input simultaneously, the internal collision management unit 244 preferentially outputs the MAC frame of the access category with the highest priority. The MAC frame output from the internal collision management unit 244 is converted into a wireless frame after a preamble is added, and is transmitted via an antenna.

When the MAC frame input from the frame processing unit 230 is classified into the access category RT, the classification unit 241 performs carrier sense and inputs the MAC frame to the internal collision management unit 244 without passing through each queue 242. The MAC frame classified into the access category RT is, for example, non-periodic low-latency traffic. Since the non-periodic low-latency traffic is subjected to carrier sense without passing through each queue 242 and is prioritized over other traffic types, it is processed with less latency than other traffic. When transmitting a non-periodic low-latency traffic, the transmitter/receiver unit 240 may temporarily stop the carrier sense of each carrier sense execution unit 243. When a dedicated RU is allocated, the transmitter/receiver unit 240 may transmit the traffic of the access category RT without performing carrier sense using the dedicated RU.

The access parameters used in carrier sense in the transmitter/receiver unit 240 of the wireless terminal apparatus 20 are, for example, CWmin, CWmax, AIFS, and TXOPLimit, as in the transmitter/receiver unit 140 of the access point 10. The shorter the CWmin and the CWmax, the easier it is for the queue 242 to obtain the transmittion right. The priority of the queue 242 becomes higher as the AIFS becomes smaller. The amount of data transmitted with one transmittion right increases as the value of TXOPLimit increases.

Note that the wireless terminal apparatus 20 may have other functional configurations as long as it is capable of executing the operations described below. For example, the channel access function of the wireless terminal apparatus 20 may be implemented in the frame processing unit 230, not in the transmitter/receiver unit 240. The transmission priority may be determined based on the required latency of the non-periodic low-latency traffic, the priority of the traffic, and the traffic type. When the wireless terminal apparatus 20 transmits uplink traffic based on a trigger frame transmitted by the access point 10, the wireless terminal apparatus 20 transmits the traffic using an RU corresponding to the RU allocation information notified by the access point 10. The wireless terminal apparatus 20 transmits the uplink non-periodic low-latency traffic using a dedicated RU. In addition, when a plurality of wireless terminal apparatuses 20 uses a common dedicated RU, the wireless terminal apparatus 20 may transmit the non-periodic low-latency traffic using a dedicated RU after performing carrier sense based on CSMA/CA in order to avoid collision with the non-periodic low-latency traffic of other wireless terminal apparatuses 20. That is, when a dedicated RU is shared by a plurality of STAs or a plurality of traffic flows, a random access method may be used in combination.

### <2> Operation

Next, the operation of the communication system 1 according to the embodiment will be described.

### <2-1> Overview of OFDMA

Below, as an overview of OFDMA in the communication system 1 according to the embodiment, the downlink communication flow, the uplink communication flow, and the OFDMA frame transfer period set in these communications will be described in order.

### (Downlink data transfer method)

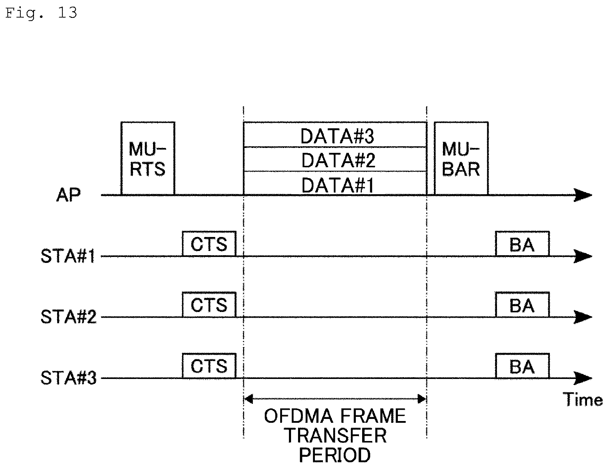

Fig. 13 is a time chart showing an example of a downlink data transfer method using OFDMA in the communication system 1 according to the embodiment. Fig. 13 illustrates a case where downlink data (traffic) is transferred between an access point 10 (AP) and three wireless terminal apparatuses 20 (STAs #1 to #3). As shown in Fig. 13, when downlink traffic occurs, the AP transmits MU-RTS (multi-user request to send) to each of STAs #1 to #3 in a batch. MU-RTS is a frame for reserving channels between the AP and a plurality of STAs when the AP starts transferring downlink traffic to a plurality of STAs. MU-RTS includes, for example, RU allocation information.

Each STA that receives MU-RTS transmits a CTS (clear to send) to the AP if it is able to receive downlink traffic. When the AP receives a CTS from each of STAs #1 to #3, it transmits data #1 to #3 stored in an OFDMA frame to STAs #1 to #3 using the associated RU (that is, at least one subcarrier). In Fig. 13, the period used for transmitting the OFDMA frame from the AP to each STA is shown as an "OFDMA frame transfer period."

Then, after transmitting the OFDMA frame to each of STAs #1 to #3, the AP transmits an MU-BAR (multi-user block acknowledgment request) to each of STAs #1 to #3 in a batch. MU-BAR is a frame for the AP to request a plurality of STAs to transmit a response in a batch. Each STA that receives MU-BAR transmits a BA (block acknowledgment) to the AP in response to the reception result of the OFDMA frame. The AP recognizes that each of data #1 to #3 has been successfully transmitted based on the reception of the BA from each STA. As a result, the communication system 1 ends the downlink data transfer using OFDMA.

Note that, in the OFDMA frame transfer period during the downlink data transfer, the transmission start time and the time required for each of data #1 to #3 may vary. The AP may transmit the RTS and BAR separately for each STA. The AP may receive the CTS from each STA at different times. The AP may receive the BA from each STA at different times. The RU used for transmitting the OFDMA frame may be allocated for each traffic or for each STA.

### (Uplink data transfer method)

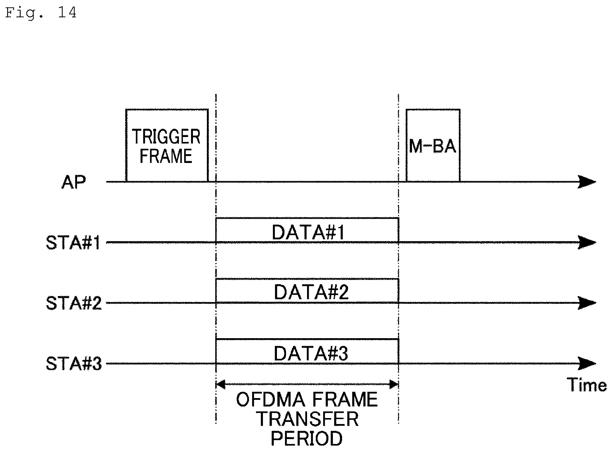

Fig. 14 is a time chart showing an example of an uplink data transfer method using OFDMA in the communication system 1 according to the embodiment. Fig. 14 illustrates a case where uplink data is transferred between an access point 10 (AP) and three wireless terminal apparatuses 20 (STAs #1 to #3). As shown in Fig. 14, when uplink traffic occurs, the AP transmits a trigger frame to each of STAs #1 to #3 in a batch.

Each STA that receives the trigger frame transmits data to the AP using the associated RU (that is, at least one subcarrier) based on the RU allocation information stored in the trigger frame. In this example, STAs #1 to #3 transmit data #1 to #3 stored in the OFDMA frame to the AP, respectively. In Fig. 14, the period used for transmitting the OFDMA frame from each STA to the AP is shown as the "OFDMA frame transfer period."

Then, after receiving OFDMA frames from each of STAs #1 to #3, the AP transmits an M-BA (multi-STA BA) to each of STAs #1 to #3 in a batch. The M-BA is a type of BA, and is a frame that the AP uses to notify a plurality of STAs that data has been successfully received. Each STA recognizes that it has successfully transmitted each of data #1 to #3 upon receiving the M-BA from the AP. In this way, the communication system 1 ends the uplink data transfer using OFDMA.

Note that in the OFDMA frame transfer period during data transfer in the uplink direction, the start time of transmission and the time required for transmission of each of the data #1 to #3 may vary. The AP may transmit a trigger frame or a BA to each STA individually. The timing at which each STA receives a trigger frame from the AP may vary. The timing at which each STA receives a BA from the AP may vary. The RU used to transmit the OFDMA frame may be allocated to each traffic or to each STA.

### (Configuration of OFDMA frame transfer period)

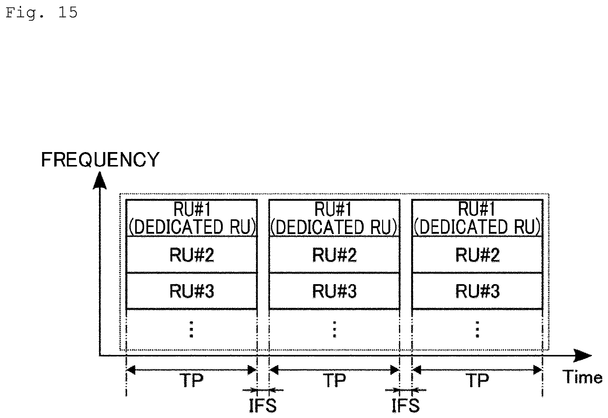

Fig. 15 is a schematic diagram showing an example of the configuration of the OFDMA frame transfer period in the communication system 1 according to the embodiment. The vertical axis corresponds to the frequency. The horizontal axis indicates the time axis. The area surrounded by the two-dot chain line corresponds to the OFDMA frame transfer period. As shown in Fig. 15, the OFDMA frame transfer period has a configuration in which a dedicated RU is allocated in association with non-periodic low-latency traffic, the RU of the OFDMA frame is divided in the time axis direction, and an IFS (inter frame space) is sandwiched between the divided RUs. Specifically, there are a plurality of transfer periods TP. Each transfer period TP is used to transfer frames associated with RUs #1, #2, #3, and the like. In this example, RU#1 is set as the dedicated RU. Each transfer period TP is set to be shorter than the required latency of the non-periodic low-latency traffic. An IFS is inserted between adjacent transfer periods TP.

As described above, in the communication system 1, a plurality of subcarriers are grouped, and a plurality of RUs including a dedicated RU associated with low-latency traffic and other RUs are set. In the OFDMA frame transfer period, the divided transfer periods TP are arranged consecutively with IFS inserted therebetween. The number of transfer periods TP included in the OFDMA frame transfer period may vary depending on the required latency of the non-periodic low-latency traffic. A plurality of dedicated RUs may be allocated to each transfer period TP.

### <2-2> Operation of access point 10

Hereinafter, detailed operations of the access point 10 according to the embodiment will be described, focusing on the functional configuration of the access point 10 shown in Fig. 9. It is assumed that the communication between each functional configuration of the access point 10 and the STA is appropriately performed via the frame processing unit 130, the transmitter/receiver unit 140, and the like.

### <2-2-1> Operation of quality management unit 121

First, the operation of the quality management unit 121 of the access point 10 will be described.

### (Dedicated RU allocation method)

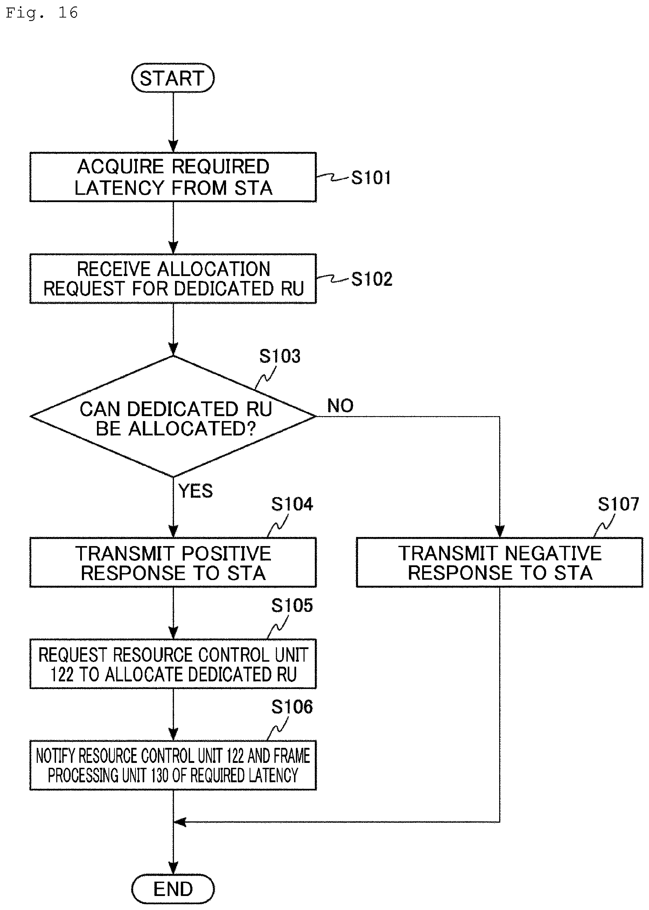

Fig. 16 is a flowchart showing an example of a negotiation method when the quality management unit 121 of the access point 10 (AP) according to the embodiment allocates non-periodic low-latency traffic to a dedicated RU. For example, when non-periodic low-latency traffic occurs after a link is established between an AP and an STA, the quality management unit 121 starts the processing of the flowchart shown in Fig. 16 (START).

First, the quality management unit 121 acquires a required latency from the STA (S101). The required latency is generated by the quality management unit 221 of the wireless terminal apparatus 20. The required latency corresponds to a latency time requested for transferring the non-periodic low-latency traffic. The frame type for transferring the required latency is not particularly limited.

Next, the quality management unit 121 receives a dedicated RU allocation request (S102). The dedicated RU allocation request is generated by the quality management unit 221 of the wireless terminal apparatus 20. The frame type for transferring the dedicated RU allocation request is not particularly limited.

Next, the quality management unit 121 determines whether a dedicated RU can be allocated (S103). The quality management unit 121 determines whether a dedicated RU can be allocated based on, for example, whether the remaining number of dedicated RUs that can be set is exceeded. The number of dedicated RUs that can be set may be preset by the AP, or may be changed depending on the number of STAs connected to the AP and the allocation of RUs.

If it is determined in the processing of S103 that a dedicated RU can be allocated (S103: YES), the quality management unit 121 transmits a positive response to the STA (S104). Then, the quality management unit 121 requests the resource control unit 122 to allocate a dedicated RU (S105). Then, the quality management unit 121 notifies the resource control unit and the frame processing unit of the required latency (S106). Then, the quality management unit 121 ends the series of processes in Fig. 16 (END).

If it is determined in the processing of S103 that a dedicated RU cannot be allocated (S103: NO), the quality management unit 121 transmits a negative response to the STA (S107). Then, the quality management unit 121 ends the series of processes in Fig. 16 (END).

### (Communication quality management method)

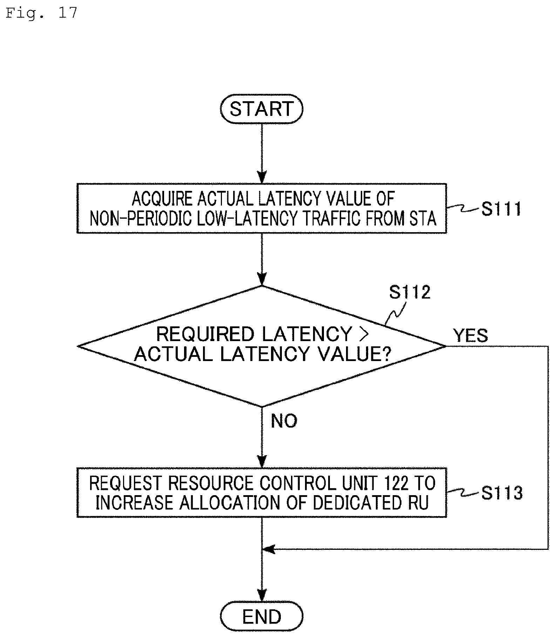

Fig. 17 is a flowchart showing an example of a communication quality management method by the quality management unit 121 of the access point 10 (AP) according to the embodiment. The quality management unit 121 starts the processing of the flowchart shown in Fig. 17 (START) after, for example, the transfer of non-periodic low-latency traffic using a dedicated RU is completed.

First, the quality management unit 121 acquires the actual latency value of the non-periodic low-latency traffic from the STA (S111). The actual latency value is calculated by the STA. The frame type for transferring the actual latency value is not particularly limited.

Next, the quality management unit 121 evaluates whether the "required latency > actual latency value" is satisfied (S112). If the actual latency value is greater than the required latency, it indicates that the latency time when transferring the non-periodic low-latency traffic does not satisfy the requirements requested by the STA.

If the "required latency > actual latency value" is not satisfied in the processing of S112 (S112: NO), the quality management unit 121 requests the resource control unit 122 to increase the allocation of dedicated RUs (S113). In other words, the quality management unit 121 requests the resource control unit 122 to increase the allocation of dedicated RUs based on the communication quality. Then, the quality management unit 121 ends the series of processes in Fig. 17 (END).

If the "required latency > actual latency value" is satisfied in the processing of S112 (S112: YES), the quality management unit 121 ends the series of processes in Fig. 17 (END).

The quality management unit 121 may execute the processes of S112 and S113 each time the actual latency value is acquired from the STA, or may execute them periodically. When the quality management unit 121 acquires the actual latency value a plurality of times, the quality management unit 121 may compare the average or minimum value of the plurality of acquired actual latency values with the required latency in the processing of S112.

### <2-2-2> Operation of resource control unit 122

Next, the operation of the resource control unit 122 of the access point 10 will be described.

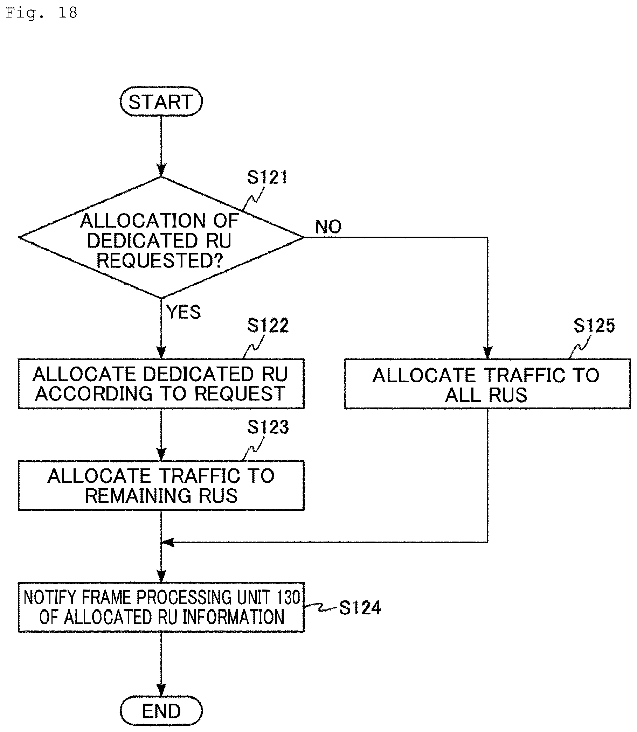

Fig. 18 is a flowchart showing an example of a RU allocation method by the resource control unit 122 of the access point 10 (AP) according to the embodiment. After a link between the AP and the STA is established, the resource control unit 122 starts the processing of the flowchart shown in Fig. 18 in response to a request for RU allocation from the STA (START).

First, the resource control unit 122 checks whether the allocation of a dedicated RU has been requested (S121). The request for dedicated RU allocation may be generated by the quality management unit 121. The frame type for transferring the RU allocation request is not particularly limited.

If the allocation of a dedicated RU has been requested in the processing of S121 (S121: YES), the resource control unit 122 allocates a dedicated RU in response to the request (S122). Then, the resource control unit 122 allocates traffic to the remaining RUs (S123). Then, the resource control unit 122 notifies the frame processing unit 130 of information on the allocated RU (S124). Then, the resource control unit 122 ends the series of processes in Fig. 18 (END).

If the allocation of a dedicated RU is not requested in the processing of S121 (S121: YES), the resource control unit 122 allocates traffic to all RUs (S122). Then, the resource control unit 122 proceeds to the processing of S124 and notifies the frame processing unit 130 of the information of the allocated RU. Then, the resource control unit 122 ends the series of processes in Fig. 18 (END).

Note that the resource control unit 122 may increase the allocation of dedicated RUs in the processing of S122 in the order of 26-tone, 52-tone, 106-tone, and so on based on a request from the quality management unit 121. When allocating RUs other than dedicated RUs, the resource control unit 122 may perform channel estimation between STAs, and if there is a RU suitable for each STA, may preferentially allocate the RU suitable for each STA. When there is traffic with a required latency other than the non-periodic low-latency traffic, the resource control unit 122 may preferentially allocate RUs to that traffic. The resource control unit 122 may also allocate RUs for each OFDMA frame based on the buffer accumulation state of downlink traffic and uplink traffic.

### <2-2-3> Operation of frame processing unit 130

Next, the operation of the frame processing unit 130 of the access point 10 will be described.

### (When transmitting downlink traffic)

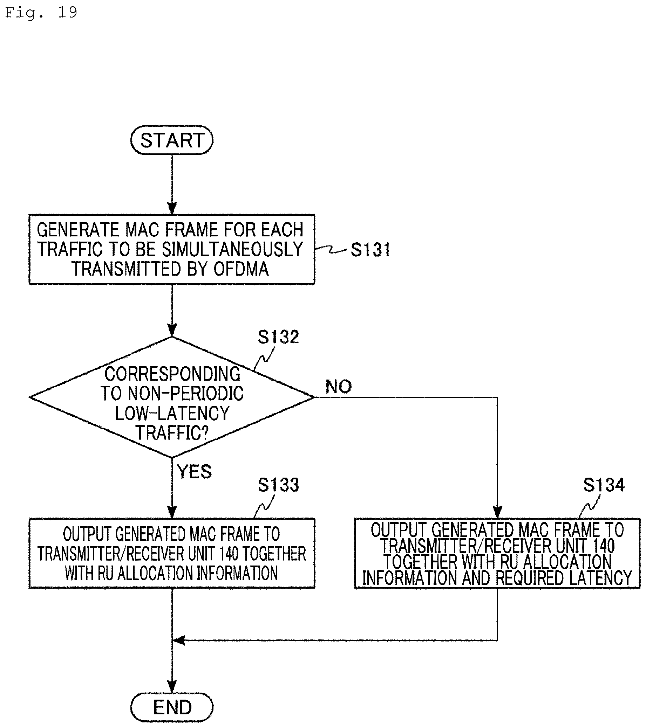

Fig. 19 is a flowchart showing an example of a trigger frame generation method by the frame processing unit 130 of the access point 10 (AP) according to the embodiment. For example, when traffic occurs after a link is established between the AP and the STA, the frame processing unit 130 starts the processing of the flowchart shown in Fig. 19 (START).

First, the frame processing unit 130 generates a MAC frame for each traffic to be simultaneously transmitted by OFDMA (S131). In the processing of S131, the frame processing unit 130 may generate a plurality of MAC frames according to the amount of traffic to be simultaneously transmitted. In addition, when a MAC frame is generated, a MAC header or the like is added.

Next, the frame processing unit 130 checks whether a dedicated RU has been allocated (S132). The processing of S132 is performed for each of the plurality of MAC frames generated in the processing of S131.

If the processing of S132 checks that the traffic corresponds to non-periodic low-latency traffic (S132: YES), the frame processing unit 130 outputs the generated MAC frame together with RU allocation information to the transmitter/receiver unit 140 (S133). The RU allocation information in the processing of S133 includes allocation information for RUs other than the dedicated RU. Then, the frame processing unit 130 ends the series of processes in Fig. 19 (END).

In the processing of S132, if it is confirmed that the traffic does not correspond to non-periodic low-latency traffic, that is, the traffic to be processed is traffic other than non-periodic low-latency traffic (S132: NO), the frame processing unit 130 outputs the generated MAC frame to the transmitter/receiver unit 140 together with the RU allocation information and the required latency (S134). The RU allocation information in the processing of S134 includes the allocation information of the dedicated RU. Then, the frame processing unit 130 ends the series of processes in Fig. 19 (END).

### (When instructing STA to transmit uplink traffic)

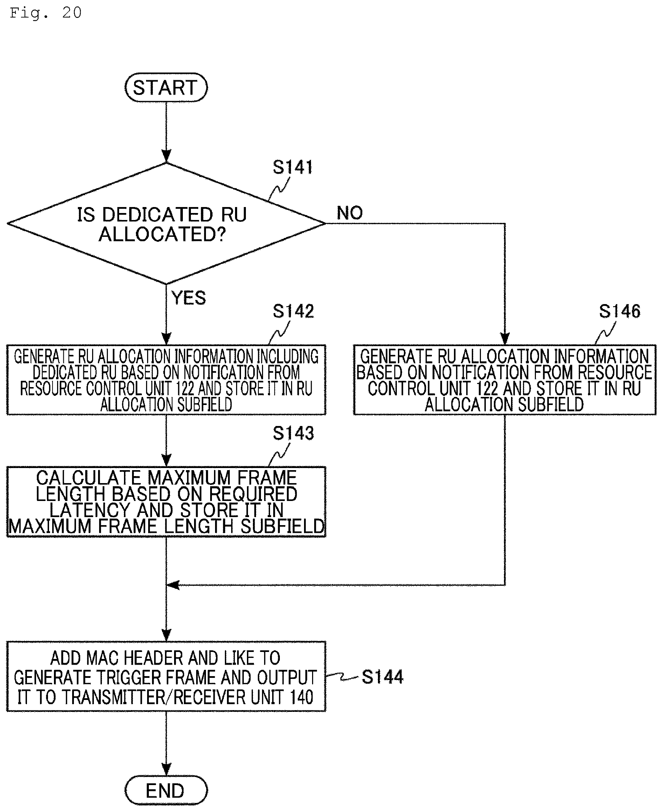

Fig. 20 is a flowchart showing an example of an OFDMA frame generation method by the frame processing unit 130 of the access point 10 (AP) according to the embodiment. For example, when the frame processing unit 130 is notified by the STA that uplink traffic has occurred, the frame processing unit 130 starts the processing of the flowchart shown in Fig. 20 (START).

First, the frame processing unit 130 checks whether a dedicated RU has been allocated (S141). That is, the frame processing unit 130 checks whether an RU for transferring non-periodic low-latency traffic between the AP and the STA has been allocated.

If it is confirmed in the processing of S141 that a dedicated RU has been allocated (S141: YES), the frame processing unit 130 generates RU allocation information including the dedicated RU based on the notification from the resource control unit 122 and stores it in the RU allocation subfield (S142). Then, the frame processing unit 130 calculates the maximum frame length based on the required latency and stores it in the maximum frame length subfield (S143). The maximum frame length information corresponds to, for example, the maximum frame length that can satisfy the required latency of the non-periodic low-latency traffic. Note that the maximum frame length information may be associated with a value smaller than the maximum frame length that can satisfy the required latency of the non-periodic low-latency traffic. Then, the frame processing unit 130 generates a trigger frame by adding a MAC header and the like, and outputs the frame to the transmitter/receiver unit 140 (S144). After that, the frame processing unit 130 ends the series of processes in Fig. 20 (END).

If it is confirmed in the processing of S141 that a dedicated RU is not allocated (S141: NO), the frame processing unit 130 generates RU allocation information based on the notification from the resource control unit 122 and stores it in the RU allocation subfield (S146). The RU allocation information generated by the processing of S146 does not include information about the dedicated RU. Then, the frame processing unit 130 proceeds to the processing of S144, generates a trigger frame by adding a MAC header and the like, and outputs the frame to the transmitter/receiver unit 140. Then, the frame processing unit 130 ends the series of processes in Fig. 20 (END).

As described above, the frame processing unit 130 can notify the STA of the allocation of RUs in uplink OFDMA by transmitting a trigger frame to the STA. The RU allocation information and maximum frame length information stored in the trigger frame may be generated by the link management unit 120.

### (When receiving uplink frame)

When the frame processing unit 130 receives a frame from the transmitter/receiver unit 140, it performs processing of the MAC header and the like. Then, the frame processing unit 130 outputs the information included in the processed frame to the network NW and the like via the LLC processing unit 110 and the like. When the received frame is a frame including data, the frame processing unit 130 outputs the received frame to the network NW. When the received frame is a request for allocation of a dedicated RU from an STA or a report on communication quality (for example, actual latency value and the like), the frame processing unit 130 outputs the received frame to the quality management unit 121. In this way, the frame processing unit 130 can select and output an appropriate output destination for the received frame depending on the type of uplink frame.

### <2-2-4> Operation of transmitter/receiver unit 140

Next, the operation of the transmitter/receiver unit 140 of the access point 10 will be described.

### (Downlink OFDMA frame transmission method)

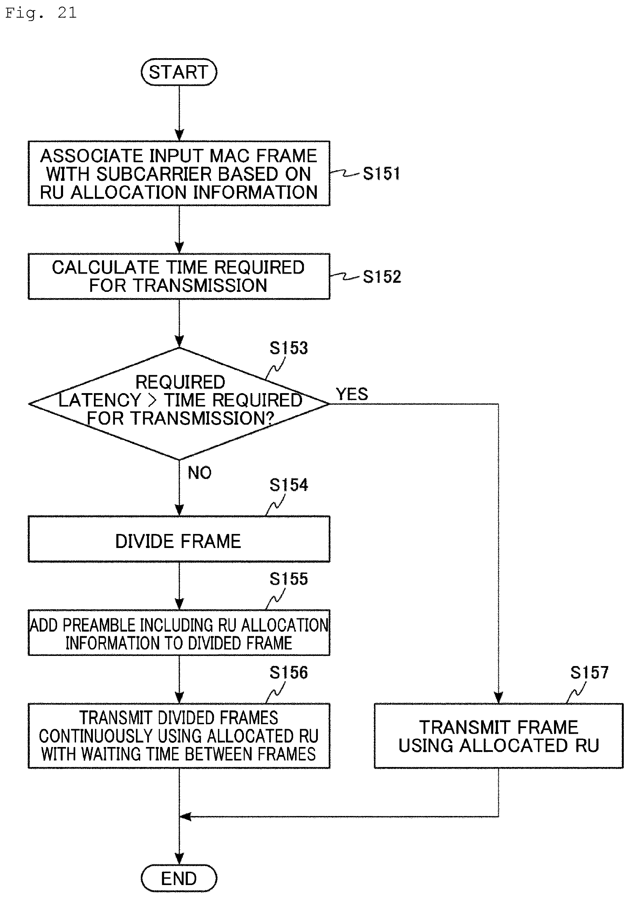

Fig. 21 is a flowchart showing an example of a downlink OFDMA frame transmission method by the transmitter/receiver unit 140 of the access point 10 (AP) according to the embodiment. When the transmitter/receiver unit 140 receives a MAC frame or the like corresponding to downlink traffic, the transmitter/receiver unit 140 starts the processing of the flowchart shown in Fig. 21 (START).

First, the transmitter/receiver unit 140 associates the MAC frame received from the frame processing unit 130 with a subcarrier based on RU allocation information (S151). The transmitter/receiver unit 140 may associate the received MAC frame with a subcarrier based on information notified by the frame processing unit 130 or the link management unit 120, or may associate the received MAC frame with a subcarrier based on information stored in the RU allocation subfield.

Next, the transmitter/receiver unit 140 calculates the time required for transmission (S152). The time required for transmission can be estimated based on the size of the MAC frame to be transmitted, the number of subchannels used to transmit the MAC frame, and the like.

Next, the transmitter/receiver unit 140 evaluates whether the "required latency > time required for transmission" is satisfied (S153).

In the processing of S153, if the "required latency > time required for transmission" is not satisfied (S153: NO), the transmitter/receiver unit 140 divides the frame (S154). The period for transmitting the divided frames corresponds to the transfer period TP shown in Fig. 15. Then, the transmitter/receiver unit 140 adds a preamble including RU allocation information to each of the divided frames (S155). Then, the transmitter/receiver unit 140 uses the allocated RU to continuously transmit the divided frames while providing a waiting period (IFS) between the frames (S156). Then, the transmitter/receiver unit 140 ends the series of processes in Fig. 21 (END).

In the processing of S153, if the "required latency > time required for transmission" (S153: YES), the transmitter/receiver unit 140 transmits the frame using the allocated RU (S157). When the processing of S157 is executed, it is possible to satisfy the required latency of the non-periodic low-latency traffic without dividing the frame. Then, the transmitter/receiver unit 140 ends the series of processes in Fig. 21 (END).

In the processes of S155 and S156, the "transmission" includes adding a preamble to the MAC frame to generate a wireless frame and wireless signal processing. The acquisition of the transmittion right in the transmitter/receiver unit 140 is based on, for example, CSMA/CA. When the transmitter/receiver unit 140 detects uplink traffic in the IFS (waiting period) of the OFDMA frame transfer period, the transmitter/receiver unit 140 is configured to postpone the transmission of the divided frames until the reception of the uplink traffic is completed.

### (Downlink non-periodic low-latency traffic transmission method)

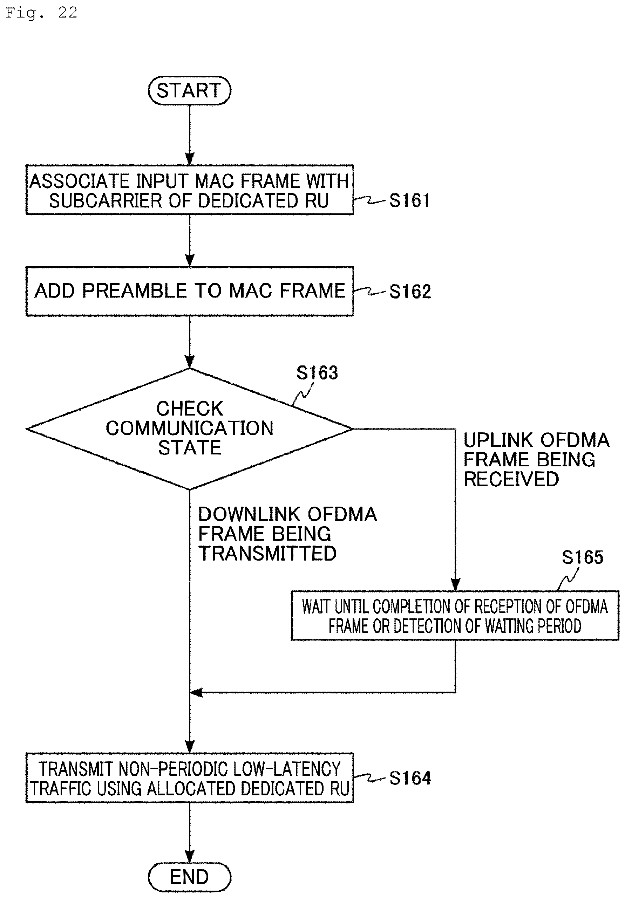

Fig. 22 is a flowchart showing an example of a downlink non-periodic low-latency traffic transmission method by the transmitter/receiver unit 140 of the access point 10 (AP) according to the embodiment. When a MAC frame corresponding to downlink non-periodic low-latency traffic is input, for example, the transmitter/receiver unit 140 starts the processing of the flowchart shown in Fig. 22 (START).

First, the transmitter/receiver unit 140 associates the input MAC frame with a subcarrier of a dedicated RU (S161). The transmitter/receiver unit 140 may associate the input MAC frame with the subcarrier based on information notified by the frame processing unit 130, the link management unit 120, and the like, or may associate the input MAC frame with the subcarrier based on information stored in the RU allocation subfield.

Next, the transmitter/receiver unit 140 adds a preamble to the MAC frame (S162). A wireless frame is generated by the processing of S162. Then, the transmitter/receiver unit 140 checks the communication state (S163).

If it is confirmed in the processing of S163 that a downlink OFDMA frame is being transmitted, the transmitter/receiver unit 140 transmits non-periodic low-latency traffic using the allocated dedicated RU (S164). In other words, when the CPU 11 is transmitting downlink traffic using another RU, the CPU 11 transmits the occurred low-latency traffic to one of the plurality of STAs using the dedicated RU in parallel with the transmission of the traffic. Then, the transmitter/receiver unit 140 ends the series of processes in Fig. 22 (END).

If it is confirmed in the processing of S163 that an uplink OFDMA frame is being received, the transmitter/receiver unit 140 waits until the reception of the OFDMA frame is completed or a waiting period is detected (S165). Then, when the transmitter/receiver unit 140 detects completion of reception of the OFDMA frame or a waiting period, it proceeds to processing of S164 and transmits non-periodic low-latency traffic using the allocated dedicated RU. Then, the transmitter/receiver unit 140 ends the series of processes in Fig. 22 (END).

As described above, when the transmitter/receiver unit 140 receives non-periodic low-latency traffic from the frame processing unit 130, it performs processing according to the transmission state. The processing of S164 is preferably performed promptly in order to reduce the latency of the non-periodic low-latency traffic.

### (Uplink traffic reception method)

When the transmitter/receiver unit 140 receives a wireless signal via an antenna, it performs wireless signal processing. Then, the transmitter/receiver unit 140 extracts a MAC frame from the wireless signal by wireless signal processing, and outputs the extracted MAC frame to the frame processing unit 130. In this way, the transmitter/receiver unit 140 can receive uplink traffic and the like.

### <2-3> Operation of wireless terminal apparatus 20

The following describes the detailed operation of the wireless terminal apparatus 20 according to the embodiment, focusing on the functional configuration of the wireless terminal apparatus 20 shown in Fig. 11. Note that the communication between each functional configuration of the wireless terminal apparatus 20 and the access point 10 is assumed to be performed via the frame processing unit 230, the transmitter/receiver unit 240, and the like as appropriate.

### <2-3-1> Operation of quality management unit 221

First, the operation of the quality management unit 221 of the wireless terminal apparatus 20 will be described.

### (Dedicated RU allocation method)

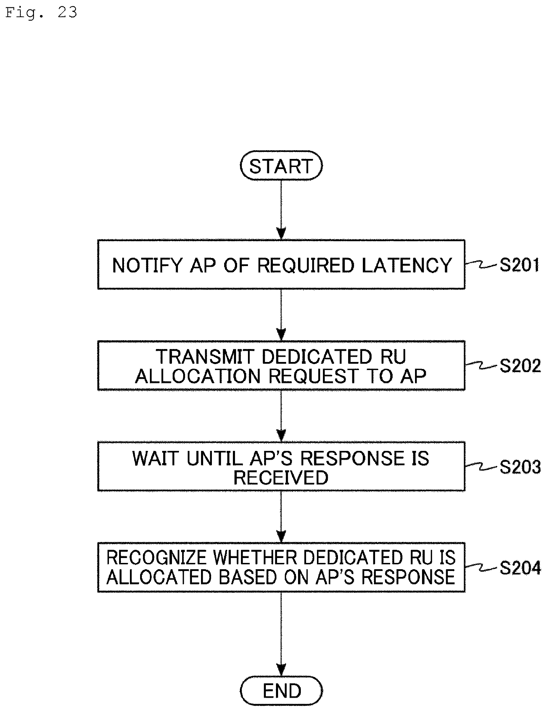

Fig. 23 is a flowchart showing an example of a dedicated RU allocation negotiation method by the quality management unit 221 of the wireless terminal apparatus 20 (STA) according to the embodiment. The quality management unit 221 starts the processing of the flowchart shown in Fig. 23 (START), for example, when the occurrence of non-periodic low-latency traffic is scheduled after a link is established between the AP and the STA.

First, the quality management unit 221 notifies the AP of the required latency (S201). The required latency is transferred, for example, from an upper layer together with the non-periodic low-latency traffic. Next, the quality management unit 221 transmits a dedicated RU allocation request to the AP (S202). The quality management unit 221 may transmit a set of the required latency and the dedicated RU allocation request to the AP in a batch. Then, the quality management unit 221 waits until it receives a response from the AP (S203).

Upon receiving the response from the AP, the quality management unit 221 recognizes whether a dedicated RU has been allocated based on the response from the AP (S204). For example, if a positive response is received, the quality management unit 221 recognizes that a dedicated RU has been allocated. On the other hand, if a negative response is received, the quality management unit 221 recognizes that a dedicated RU has not been allocated. Then, the quality management unit 221 ends the series of processes shown in Fig. 23 (END).

If the wireless terminal apparatus 20 confirms the allocation of a dedicated RU in the processing of S204, the wireless terminal apparatus 20 can transmit non-periodic low-latency traffic using the dedicated RU until the dedicated RU allocation is released. After receiving a negative response, the quality management unit 221 may retry the processes of S201 to S204 after a predetermined time has elapsed. If a dedicated RU is not allocated, the quality management unit 221 may notify the application that it is difficult to satisfy the required latency.

### (Communication quality management method)

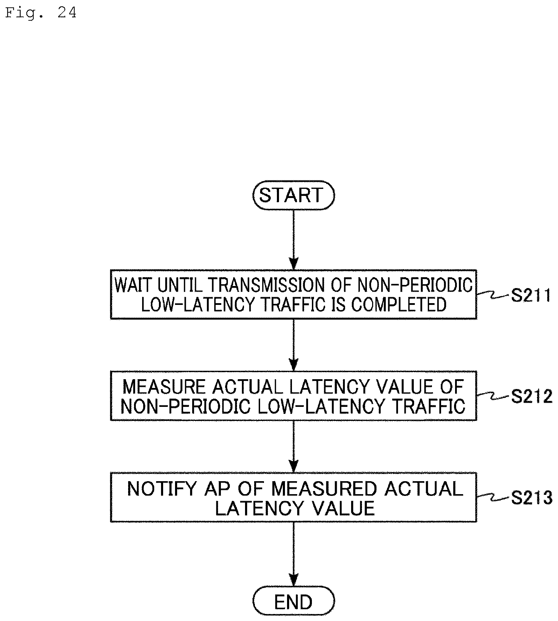

Fig. 24 is a flowchart showing an example of a communication quality management method by the quality management unit 221 of the wireless terminal apparatus 20 (STA) according to the embodiment. For example, when non-periodic low-latency traffic occurs after a link is established between the AP and the STA, the quality management unit 221 starts the processing of the flowchart shown in Fig. 24 (START).

First, the quality management unit 221 waits until the transmission of the non-periodic low-latency traffic is completed (S211).

When the transmission of the non-periodic low-latency traffic is completed, the quality management unit 221 measures the actual latency value of the non-periodic low-latency traffic (S212). The actual latency value corresponds to, for example, the time required from when the non-periodic low-latency traffic occurs (when the traffic is input to the buffer) until the transmission of the non-periodic low-latency traffic is completed.

Then, the quality management unit 221 notifies the AP of the measured actual latency value (S213). Then, the quality management unit 221 ends the series of processes in Fig. 24 (END).

Note that the actual latency value transmitted in the processing of S213 may be an average value of a plurality of actual latency values, a jitter at the time of transmission of the non-periodic low-latency traffic, a maximum latency calculated based on the actual latency value and a predetermined percentage. The processing of S213 may be executed based on a request from the AP, or may be notified to the AP when the actual latency value exceeds the required latency. The quality management unit 221 can determine whether resources corresponding to the required latency are allocated by the series of processes in Fig. 24.

### <2-3-2> Operation of resource control unit 222

Next, the operation of the resource control unit 222 of the wireless terminal apparatus 20 will be described.

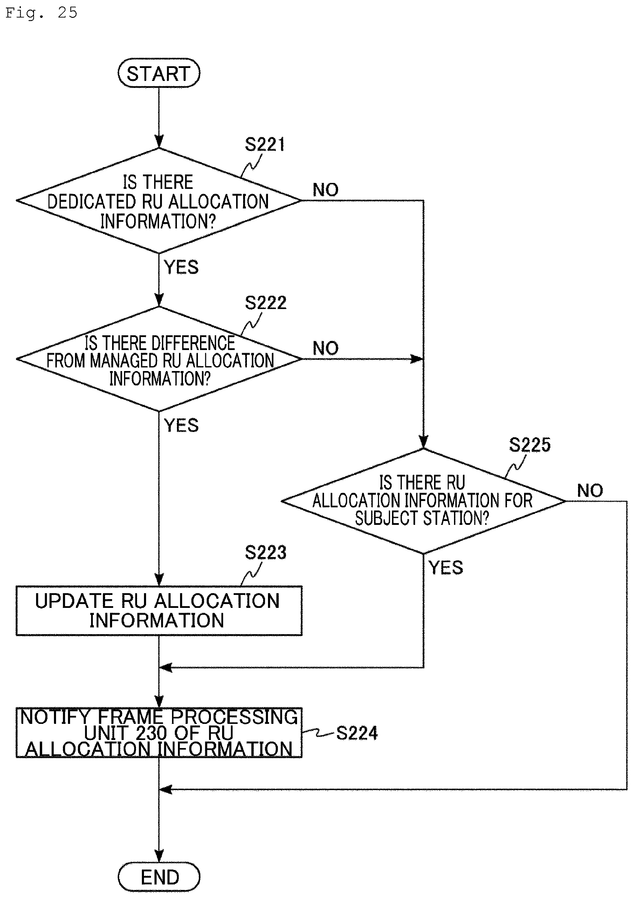

Fig. 25 is a flowchart showing an example of an RU allocation information acquisition and updating method by the resource control unit 222 of the wireless terminal apparatus 20 (STA) according to the embodiment. After a link between the AP and the STA is established, for example, when the resource control unit 222 receives RU allocation information from the AP, the resource control unit 222 starts the processing of the flowchart shown in Fig. 25 (START).

First, the resource control unit 222 checks whether the received RU allocation information includes dedicated RU allocation information (S221).

If it is confirmed in the processing of S221 that there is dedicated RU allocation information (S221: YES), the resource control unit 222 checks whether there is a difference from the managed RU allocation information (S222).

If it is confirmed in the processing of S222 that there is a difference from the managed RU allocation information (S222: YES), the resource control unit 222 updates the managed RU allocation information (S223). Then, the resource control unit 222 notifies the frame processing unit 230 of the updated RU allocation information (S224). Then, the resource control unit 222 ends the series of processes in Fig. 25 (END).

If it is not confirmed in the processing of S221 that there is dedicated RU allocation information (S221: NO), or if it is confirmed in the processing of S222 that there is no difference from the managed RU allocation information (S222: NO), the resource control unit 222 confirms whether there is RU allocation information for the subject station, that is, whether there is RU allocation information for traffic other than non-periodic low-latency traffic for the subject station (S225).

If it is confirmed in the processing of S225 that there is RU allocation information for the subject station (S225: YES), the resource control unit 222 proceeds to the processing of S224 and notifies the frame processing unit 230 of the RU allocation information. After that, the resource control unit 222 ends the series of processes in Fig. 25 (END).

If it is confirmed in the processing of S225 that there is no RU allocation information for the subject station (S225: NO), the resource control unit 222 ends the series of processes in Fig. 25 (END).

### <2-3-3> Operation of frame processing unit 230

Next, the operation of the frame processing unit 230 of the wireless terminal apparatus 20 will be described.

### (When receiving frame)

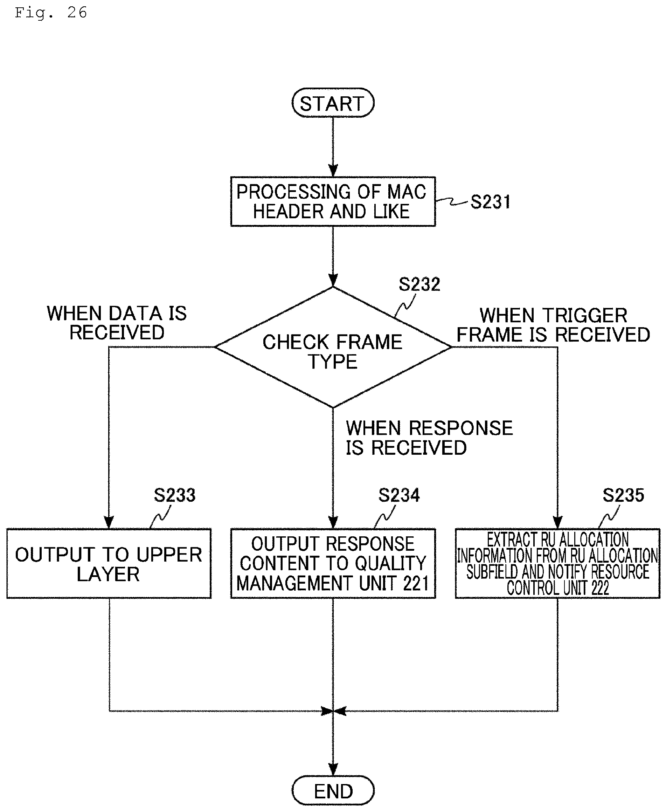

Fig. 26 is a flowchart showing an example of a downlink frame processing method by the frame processing unit 230 of the wireless terminal apparatus 20 (STA) according to the embodiment. For example, when the frame processing unit 230 receives a frame from the transmitter/receiver unit 140 after a link is established between the AP and the STA, the frame processing unit 230 starts the processing of the flowchart shown in Fig. 26 (START).

First, the frame processing unit 230 executes the processing of the MAC header and the like (S231).

Next, the frame processing unit 230 checks the frame type (S232). When data is received, the frame processing unit 230 outputs the data included in the processed frame to the upper layer (S233). When a response is received, the frame processing unit 230 outputs the response content to the quality management unit 221 (S234). When the trigger frame is received, the frame processing unit 230 extracts the RU allocation information from the RU allocation subfield and notifies the resource control unit 222 (S235). Then, the frame processing unit 230 ends the series of processes in Fig. 26 (END).

### (When transmitting uplink traffic)

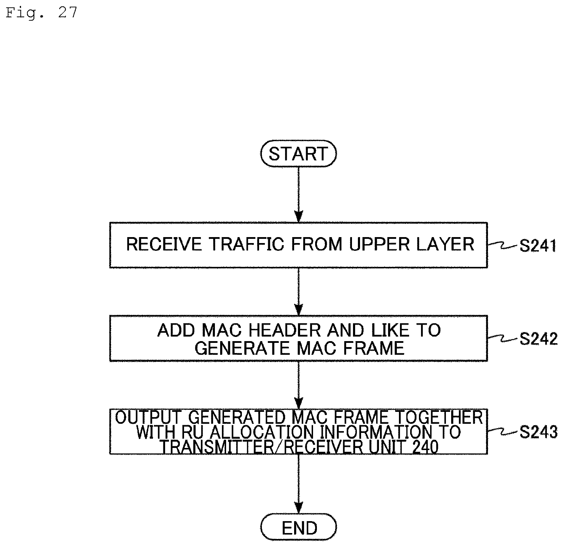

Fig. 27 is a flowchart showing an example of an uplink frame processing method by the frame processing unit 230 of the wireless terminal apparatus 20 (STA) according to the embodiment. For example, when uplink traffic occurs after a link is established between the AP and the STA, the frame processing unit 230 starts the processing of the flowchart shown in Fig. 27 (START).

First, the frame processing unit 230 receives traffic from an upper layer (S241). The traffic in S241 may be non-periodic low-latency traffic or other traffic.

Next, the frame processing unit 230 adds a MAC header and the like to generate a MAC frame (S242). The MAC frame generated by the processing of S242 includes data corresponding to non-periodic low-latency traffic or data corresponding to other traffic.

Next, the frame processing unit 230 outputs the generated MAC frame together with RU allocation information to the transmitter/receiver unit 240 (S243). This RU allocation information may or may not include dedicated RU allocation information based on the RU allocation state between the AP and a plurality of STAs. Then, the frame processing unit 230 ends the series of processes in Fig. 27 (END).

### <2-3-4> Operation of transmitter/receiver unit 240

Next, the operation of the transmitter/receiver unit 240 of the wireless terminal apparatus 20 will be described.

### (Downlink frame reception method)

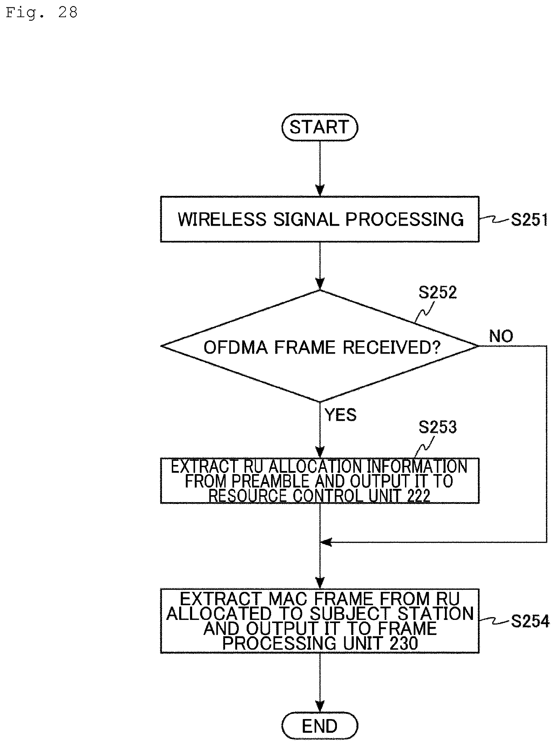

Fig. 28 is a flowchart showing an example of a downlink frame reception method by the transmitter/receiver unit 240 of the wireless terminal apparatus 20 (STA) according to the embodiment. When the transmitter/receiver unit 240 receives a wireless signal, for example, the transmitter/receiver unit 240 starts the processing of the flowchart shown in Fig. 28 (START).

First, the transmitter/receiver unit 240 executes wireless signal processing (S251). By the processing of S251, the transmitter/receiver unit 240 acquires a wireless frame from the wireless signal.

Next, the transmitter/receiver unit 240 checks whether an OFDMA frame has been received (S252). In the processing of S252, the transmitter/receiver unit 240 checks the frame type, for example.

If it is confirmed in the processing of S252 that an OFDMA frame has been received (S252: YES), the transmitter/receiver unit 240 extracts RU allocation information from the preamble and outputs the information to the resource control unit 222 (S253). Then, the transmitter/receiver unit 240 extracts a MAC frame from the RU allocated to the subject station and outputs the frame to the frame processing unit 230 (S254). After that, the transmitter/receiver unit 240 ends the series of processes in Fig. 28 (END).

If it is not confirmed in the processing of S252 that an OFDMA frame has been received, that is, if the received frame is a normal wireless frame that is not an OFDMA frame (S252: NO), the transmitter/receiver unit 240 proceeds to the processing of S254, extracts the MAC frame, and outputs the frame to the frame processing unit 230. Then, the transmitter/receiver unit 240 ends the series of processes in Fig. 28 (END).

### (Uplink frame transmission method)

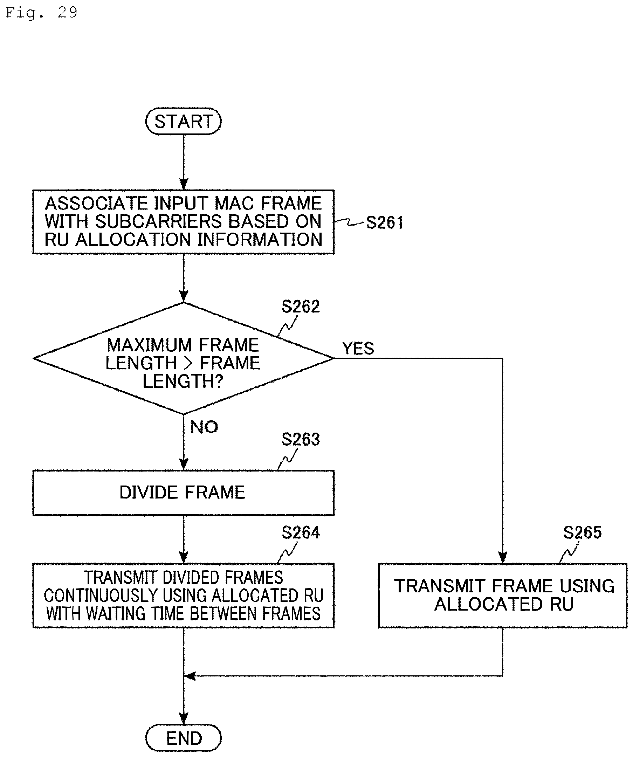

Fig. 29 is a flowchart showing an example of an uplink OFDMA frame transmission method by the transmitter/receiver unit 240 of the wireless terminal apparatus 20 (STA) according to the embodiment. When a MAC frame corresponding to uplink traffic is input, for example, the transmitter/receiver unit 240 starts the processing of the flowchart shown in Fig. 29 (START).

First, the transmitter/receiver unit 240 associates the input MAC frame with a subcarrier based on the RU allocation information (S261). The transmitter/receiver unit 240 may associate the input MAC frame with the subcarrier based on information notified by the frame processing unit 230, the link management unit 220, and the like, or based on information stored in the RU allocation subfield.

Then, the transmitter/receiver unit 240 evaluates whether "maximum frame length > frame length" is satisfied (S262).

If "maximum frame length > frame length" is not satisfied in the processing of S262 (S262: NO), the transmitter/receiver unit 240 divides the frame (S263). The period for transmitting the divided frames corresponds to the transfer period TP shown in Fig. 15. Then, the transmitter/receiver unit 240 uses the allocated RU to continuously transmit the divided frames while providing a waiting period (IFS) between the frames (S264). Then, the transmitter/receiver unit 240 ends the series of processes in Fig. 29 (END).

In the processing of S262, if "maximum frame length > frame length" is satisfied (S262: YES), the transmitter/receiver unit 140 transmits the frame using the allocated RU (S265). When the processing of S265 is executed, it is possible to satisfy the required latency of the non-periodic low-latency traffic without dividing the frame. Then, the transmitter/receiver unit 240 ends the series of processes in Fig. 29 (END).

In the processes of S264 and S265, the "transmission" includes adding a preamble to the MAC frame to generate a wireless frame and wireless signal processing. The transmittion right in the transmitter/receiver unit 240 is acquired based on, for example, CSMA/CA. When the transmitter/receiver unit 240 detects downlink traffic in the IFS (waiting period) of the OFDMA frame transfer period, the transmitter/receiver unit 240 is configured to postpone the transmission of the divided frames until the reception of the downlink traffic is completed.

### (Uplink non-periodic low-latency traffic transmission method)

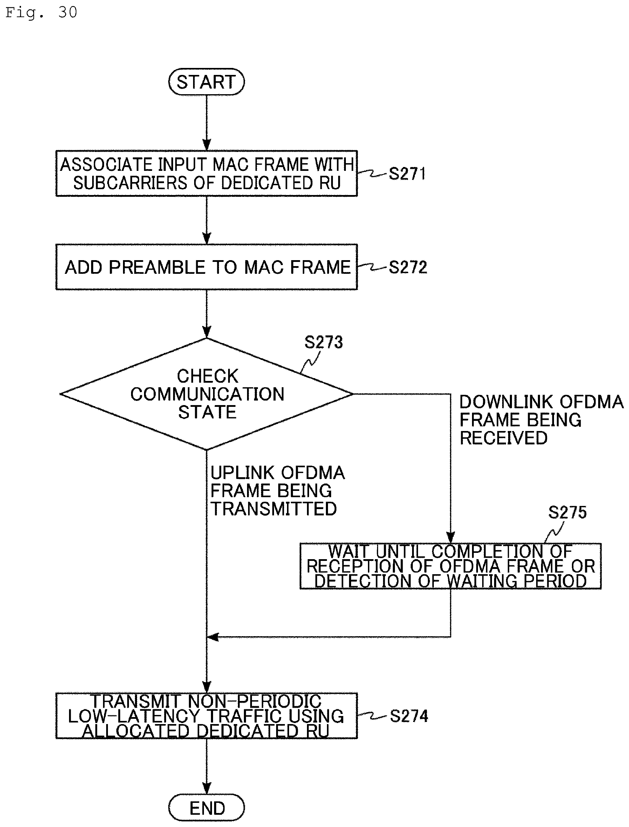

Fig. 30 is a flowchart showing an example of an uplink non-periodic low-latency traffic transmission method by the transmitter/receiver unit 240 of the wireless terminal apparatus 20 (STA) according to the embodiment. When a MAC frame corresponding to uplink non-periodic low-latency traffic is input, for example, the transmitter/receiver unit 240 starts the processing of the flowchart shown in Fig. 30 (START).

First, the transmitter/receiver unit 240 associates the input MAC frame with a subcarrier of a dedicated RU (S271). The transmitter/receiver unit 240 may associate the input MAC frame with the subcarrier based on information notified by the frame processing unit 230, the link management unit 220, and the like, or may associate the input MAC frame with the subcarrier based on information stored in the RU allocation subfield.

Next, the transmitter/receiver unit 240 adds a preamble to the MAC frame (S272). A wireless frame is generated by the processing of S262. Then, the transmitter/receiver unit 140 checks the communication state (S273).

If it is confirmed in the processing of S273 that an uplink OFDMA frame is being transmitted, the transmitter/receiver unit 240 transmits non-periodic low-latency traffic using the allocated dedicated RU (S274). Then, the transmitter/receiver unit 240 ends the series of processes in Fig. 30 (END).

If it is confirmed in the processing of S273 that a downlink OFDMA frame is being received, the transmitter/receiver unit 240 waits until the reception of the OFDMA frame is completed or a waiting period is detected (S275). Then, the transmitter/receiver unit 240 proceeds to the processing of S274 and transmits non-periodic low-latency traffic using the allocated dedicated RU. Then, the transmitter/receiver unit 140 ends the series of processes in Fig. 30 (END).

As described above, when the transmitter/receiver unit 240 receives non-periodic low-latency traffic from the frame processing unit 230, it performs processing according to the transmission state. The processing of S274 is preferably performed promptly in order to reduce the latency of the non-periodic low-latency traffic.

### <3> Advantageous Effects of embodiment

According to the communication system 1 according to the embodiment described above, it is possible to satisfy the required latency of low-latency traffic that occurs non-periodically. The advantageous effects of the embodiment are described below in detail.

In OFDMA, the access point generates a plurality of RUs by grouping subcarriers for downlink data transfer and allocates them to a plurality of STAs. Then, the access point transmits data to a plurality of STAs in parallel using the plurality of RUs. In addition, the access point allocates RUs to each STA for uplink data transfer and notifies them by a trigger frame. Then, each STA transmits data using the allocated RU.

The communication system 1 according to the embodiment sets dedicated RUs when allocating RUs to traffic or STAs. Dedicated RUs are allocated (reserved) for non-periodic low-latency traffic, regardless of the presence or absence of traffic. When non-periodic low-latency traffic occurs in the communication system 1, traffic in the same direction as the transfer direction of the OFDMA frame is promptly transmitted using a dedicated RU. Even when traffic in the same direction as the transfer direction of the OFDMA frame is transmitted using a dedicated RU in response to the occurrence of traffic, interference with other traffic can be suppressed. Therefore, the communication system 1 according to the embodiment can suppress latency and jitter of non-periodic low-latency traffic occurring in the same direction as the transfer direction of the OFDMA frame.

On the other hand, traffic in the opposite direction to the transfer direction of the OFDMA frame may not be received accurately due to interference between adjacent RUs even if a dedicated RU is not used. In response to this, the communication system 1 according to the embodiment divides the RUs in the period during which the OFDMA frame is transmitted in the time axis direction and inserts a waiting period (IFS) between the divided and adjacent RUs. Then, taking into consideration the presence of reverse traffic, the communication system 1 checks the presence or absence of traffic in the IFS when the OFDMA frame is longer than the required latency of the non-periodic low latency traffic. Then, the communication system 1 transmits traffic in the opposite direction to the transfer direction of the OFDMA frame using a dedicated RU during the IFS or after the transmission of the OFDMA frame is completed. The communication system 1 is also configured to postpone the transmission of traffic by other RUs when the transmission of reverse traffic in the dedicated RU is started. As a result, the communication system 1 can suppress the latency and jitter of non-periodic low-latency traffic even if the traffic is in the opposite direction to the transfer direction of the OFDMA frame.

As described above, the communication system 1 according to the embodiment can suppress the latency and jitter not only for periodic traffic but also for non-periodic low-latency traffic. Therefore, the communication system 1 according to the embodiment can satisfy the required latency of low-latency traffic that occurs non-periodically.

### <4> Others

In the above embodiment, a case where non-periodic low-latency traffic is transferred using a dedicated RU is illustrated, but the present invention is not limited to this. A dedicated RU may be used to transfer low-latency traffic that occurs periodically. Even when low-latency traffic that occurs periodically is transferred, latency and jitter can be suppressed using a dedicated RU.

In the embodiment, the flowcharts used to describe the operations are merely examples. The order of the processing of each operation described in the embodiments may be replaced within a range in which each operation can be fulfilled, or other processing may be added. The format of the wireless frame described in the embodiment is merely an example. The wireless frame used in the communication system 1 may be in another format as long as it is capable of executing the operations described in the embodiment. A wireless communication standard different from the IEEE802.11 standard may be used for wireless communication between the access point 10 and the wireless terminal apparatus 20. "RU" may be called a "unit."

In the communication system 1, the CPU 11 of the access point 10 and the CPU 21 of the wireless terminal apparatus 20 may each be another circuit. For example, each of the access point 10 and the wireless terminal apparatus 20 may be equipped with an MPU (Micro Processing Unit) or the like instead of a CPU. Each of the steps of processing described in the embodiments may be implemented by dedicated hardware. The processes of the access point 10 and the wireless terminal apparatus 20 may be a mixture of processes executed by software and processes executed by hardware, or may be only one of them.

The access point 10 may establish a multilink with the wireless terminal apparatus 20 using a plurality of channels. Each of the access point 10 and the wireless terminal apparatus 20 may include a plurality of transmitter/receiver units (STA functions) corresponding to a plurality of channels. In the multilink, one or more STA functions may be allocated to one traffic type. For example, the association between traffic and STA functions is set so that the traffic volume (data volume) is even among a plurality of links constituting the multilink. Traffic of similar types (priority/non-priority and the like) may be collected in a specific link constituting the multilink.

Note that the present invention is not limited to the above-described embodiment and various modifications can be made in the implementation stage without departing from the spirit and scope of the invention. In addition, each of the embodiments may be combined appropriately, and in such a case, advantageous effects of the combinations can be obtained. Further, the foregoing embodiments include various inventions, and various inventions can be extracted by selecting combinations of the plurality of constituent elements disclosed herein. For example, even if several constituent elements are removed from all the constituent elements described in the embodiments, configurations in which those constituent elements are removed can be extracted as an invention as long as the problem can be solved and the advantageous effects can be obtained.

### [Reference Signs List]

1 Communication system
10 Access point
20, 20-1, 20-2, 20-3 Wireless terminal apparatus
11, 21 CPU
12, 22 ROM
13, 23 RAM
14, 24 Wireless communication module
15 Wired communication module
25 Display
26 Storage
200 Application execution unit
110, 210 LLC processing unit
120, 220 Link management unit
121, 221 Quality control unit
122, 222 Resource control unit
130, 230 Frame processing unit
140, 240 Transmitter/receiver unit
141, 241 Classification unit
142, 142A, 142B, 142C, 142D, 242, 242A, 242B, 242C, 242D Queue
143, 143A, 143B, 143C, 143D, 243, 243A, 243B, 243C, 243D Carrier sense execution unit
144, 244 Internal collision management unit

## Claims

1. An access point comprising:
a communication circuit that transmits and receives wireless signals using a plurality of subcarriers; and
a processor that establishes links with a plurality of wireless terminal apparatuses using the communication circuit, wherein
the processor groups the plurality of subcarriers to set a plurality of units including a first unit associated with low-latency traffic and a second unit associated with other traffic,
when low-latency traffic occurs, the processor checks a communication state of the second unit,
when the second unit is transmitting first traffic in a downlink direction, the processor transmits the occurred low-latency traffic to one of the plurality of wireless terminal apparatuses using the first unit in parallel with the transmission of the first traffic, and
when the second unit is receiving second traffic in an uplink direction, the processor transmits the occurred low-latency traffic to one of the plurality of wireless terminal apparatuses using the first unit during a waiting period for the transmission of the second traffic or after the reception of the second traffic is completed.

2. The access point according to claim 1, wherein when third traffic in a downlink direction occurs, the processor allocates the third traffic to one or a plurality of frames based on a required latency of low-latency traffic, and transmits the plurality of frames to one of the plurality of wireless terminal apparatuses using the second unit successively while inserting a waiting period between the plurality of frames.

3. The access point according to claim 1, wherein the processor transmits a trigger frame including allocation information of the plurality of units to the plurality of wireless terminal apparatuses or traffic, to each of the plurality of wireless terminal apparatuses, and the allocation information includes information explicitly indicating the allocation of the first unit to the low-latency traffic.

4. The access point according to claim 1, wherein the processor transmits an MU-RTS including allocation information of the plurality of units to the plurality of wireless terminal apparatuses or traffic, to each of the plurality of wireless terminal apparatuses, and the allocation information includes information explicitly indicating the allocation of the first unit to the low-latency traffic.

5. A wireless terminal apparatus configured to establish a link with an access point that groups a plurality of subcarriers to set a plurality of units including a first unit associated with low-latency traffic and a second unit associated with other traffic, the apparatus comprising:
a communication circuit that transmits and receives wireless signals using one of the plurality of units; and
a processor that establishes a link with the access point using the communication circuit, wherein
when low-latency traffic occurs, the processor checks a communication state of the second unit, when the second unit is transmitting first traffic in an uplink direction, the processor transmits the occurred low-latency traffic to the access point using the first unit in parallel with the transmission of the first traffic, and
when the second unit is receiving second traffic in a downlink direction, the processor transmits the occurred low-latency traffic to the access point using the first unit during a waiting period for the transmission of the second traffic or after the reception of the second traffic is completed.

6. The wireless terminal apparatus according to claim 5, wherein when third traffic in an uplink direction occurs, the processor allocates the occurred third traffic to one or a plurality of frames based on required latency of low-latency traffic, and transmits the plurality of frames to the access point using the second unit successively while inserting a waiting period between the plurality of frames.

7. The wireless terminal apparatus according to claim 5, wherein when fourth traffic in an uplink direction occurs, the processor transmits the fourth traffic to the access point using the first unit among the plurality of units indicated by the allocation information, upon receiving a trigger frame that includes allocation information of the plurality of units from the access point.

8. The wireless terminal apparatus according to claim 5, wherein after completing the transmission of the occurred low-latency traffic, the processor measures an actual latency value of the occurred low-latency traffic, and notifies the access point of information based on the actual latency value.
